(19) Europäisches Patentamt
European Patent Office
Office européen des brevets

(11) **EP 4 407 711 A1**

(12) **EUROPEAN PATENT APPLICATION**
published in accordance with Art. 153(4) EPC

(43) Date of publication:
**31.07.2024 Bulletin 2024/31**

(21) Application number: **22961212.2**

(22) Date of filing: **18.10.2022**

(51) International Patent Classification (IPC):
**H01M 4/36** (2006.01)        **H01M 4/505** (2010.01)

(52) Cooperative Patent Classification (CPC):
**H01M 10/056; H01M 4/0423; H01M 4/0471;
H01M 4/131; H01M 4/136; H01M 4/1391;
H01M 4/1397; H01M 4/36; H01M 4/366;
H01M 4/381; H01M 4/505; H01M 4/525;
H01M 4/58; H01M 4/5825; H01M 4/62;**        (Cont.)

(86) International application number:
**PCT/CN2022/125840**

(87) International publication number:
**WO 2024/082121 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Contemporary Amperex Technology
Co., Limited
Ningde City, Fujian PRC 352100 (CN)**

(72) Inventors:
• **LI, Qiang
  Ningde, Fujian 352100 (CN)**

• **LIANG, Zibin
  Ningde, Fujian 352100 (CN)**
• **WANG, Yuhao
  Ningde, Fujian 352100 (CN)**
• **CHENG, Weiming
  Ningde, Fujian 352100 (CN)**
• **HE, Jinhua
  Ningde, Fujian 352100 (CN)**

(74) Representative: **Jacob, Reuben Ellis
  Maucher Jenkins
  Seventh Floor Offices
  Artillery House
  11-19 Artillery Row
  London SW1P 1RT (GB)**

(54) **POSITIVE ELECTRODE MATERIAL AND PREPARATION METHOD THEREOF, POSITIVE POLE PIECE, SECONDARY BATTERY, AND ELECTRICAL APPARATUS**

(57)    This application provides a positive electrode material, a preparation method of the positive electrode material, a positive electrode plate, a secondary battery, and an electrical device. The positive electrode material includes: a sodium-containing positive electrode material substrate; and a coating layer, covering at least a part of a surface of the sodium-containing positive electrode material substrate. The coating layer includes $Na_xM_yO_2$, where M includes at least one of B, Si, or P, $x > 0$, and $y > 0$.

FIG. 5

**(Cont. next page)**

EP 4 407 711 A1

(52) Cooperative Patent Classification (CPC): (Cont.)
 **H01M 10/054;** H01M 2004/021; H01M 2004/028

**Description**

**TECHNICAL FIELD**

This application relates to the field of electrochemical technology, and in particular, to a positive electrode material and a preparation method thereof, a positive electrode plate, a secondary battery, and an electrical device.

**BACKGROUND**

In recent years, secondary batteries represented by sodium-ion batteries have been applied wider in many fields, including energy storage power systems such as hydro, thermal, wind, and solar power stations, and other fields such as electric tools, electric bicycles, electric motorcycles, and electric vehicles, military equipment, and aerospace. The significant development of the secondary batteries gives rise to higher requirements on the energy density, cycle performance, safety performance, and other performance of the batteries. However, currently, the secondary batteries represented by conventional sodium-ion batteries generally suffer from the problem of inferior cycle performance, and are unable to meet practical use requirements.

**SUMMARY**

An objective of this application is to provide a positive electrode material and a preparation method thereof, a positive electrode plate, a secondary battery, and an electrical device to enhance cycle performance of the secondary battery.

To achieve the above objective of this application, a first aspect of this application provides a positive electrode material, including: a sodium-containing positive electrode material substrate; and a coating layer, covering at least a part of a surface of the sodium-containing positive electrode material substrate, where the coating layer includes $Na_xM_yO_2$, M includes at least one of B, Si, or P, x > 0, and y > 0. Net charge of the $Na_xM_yO_2$ is zero.

The positive electrode material according to this application includes a sodium-containing positive electrode material substrate and a $Na_xM_yO_2$-containing coating layer. The $Na_xM_yO_2$ formed in the coating layer can consume residual alkali ($Na_2CO_3$ and NaOH) on the surface of the sodium-containing positive electrode material substrate, reduce the content of the residual alkali ($Na_2CO_3$ and NaOH) on the surface, reduce the irreversible capacity loss of the positive electrode material caused by the residual alkali on the surface, and enhance the cycle performance. In addition, the coating layer can isolate the sodium-containing positive electrode material substrate from the air, avoid exposure of the sodium-containing positive electrode material substrate to the air, and prevent continuous reaction of the material with components (water and carbon dioxide) in the air, thereby suppressing continuous generation of the residual alkali on the surface, maintain integrity of a crystal structure of the material, and in turn, enhancing the cycle performance of the positive electrode material.

In some embodiments of this application, the coating layer includes: a transition layer relatively close to the sodium-containing positive electrode material substrate, where the transition layer includes an M-doped region; and an oxide layer relatively away from the sodium-containing positive electrode material substrate, where the oxide layer includes $Na_xM_yO_2$.

The coating layer may include a transition layer and an oxide layer. The transition layer can effectively enhance the bonding force between the coating layer and the sodium-containing positive electrode material substrate, avoid peeling of the coating layer in a long cycling process, and enhance structural stability of the surface of the positive electrode material. In addition, the M-doped region contained in the coating layer is a superficial M-doped region close to the sodium-containing positive electrode material substrate. The superficial doping can form a chemical bond between the element M and the sodium-containing positive electrode material substrate, thereby further increasing the bonding force of adhesion to the sodium-containing positive electrode material substrate, enhancing the structural stability of the surface of the positive electrode material, and in turn, enhancing the cycle stability. Therefore, the oxide layer formed can consume residual alkali ($Na_2CO_3$ and NaOH) on the surface of the sodium-containing positive electrode material substrate, reduce the content of the residual alkali ($Na_2CO_3$ and NaOH) on the surface, reduce the irreversible capacity loss of the positive electrode material caused by the residual alkali on the surface, and further enhance the cycle performance.

The positive electrode material satisfies at least one of the following conditions:

(1) a content of residual alkali on a surface of the positive electrode material is 0.5 wt% to 5.5 wt%, and optionally 0.8 wt% to 4.5 wt%; and
(2) based on a total mass of the coating layer, a mass percent of the element M in the doped region is greater than the mass percent of the element M in the oxide layer, and optionally, the mass percent of the element M in the doped region is 0.05% to 0.3%.

The mass percent of the element M in the doped region is greater than the mass percent of the element M in the oxide layer, thereby facilitating formation of more chemical bonds between the element M and the sodium-containing positive electrode material substrate, and in turn, further increasing the bonding force between the coating layer and the sodium-containing positive electrode material substrate, and enhancing cycle stability.

In some embodiments of this application, the positive electrode material satisfies at least one of the following conditions:

(1) The sodium-containing positive electrode material substrate includes one or more of a layered oxide, a Prussian blue compound, or a polyanionic compound.

Optionally, the layered oxide is expressed by a chemical formula $Na_xMn_aFe_bNi_cL_dO_{2-e}$, where, $0.7 < x \leq 1$, $0 < a$, $0 \leq b$, $0.1 < c \leq 0.3$, $0 \leq d$, $a + b + c + d + e = 1$, $-0.1 \leq e \leq 0.1$, and L is one or more selected from Cu, Li, Ti, Zr, K, Nb, Mg, Ca, Mo, Zn, Cr, W, Bi, Sn, Ge, Al, Si, La, Ta, P, or B.

Further optionally, the sodium-containing positive electrode material substrate is an O3-type layered oxide.

(2) The sodium-containing positive electrode material substrate is a micron-scale particle, and an average particle diameter of the micron-scale particle is 1 $\mu$m to 25 $\mu$m, and optionally 1 $\mu$m to 15 $\mu$m.

(3) A mass percent of the coating layer in the positive electrode material is 0.001% to 3%, optionally 0.01% to 2%, and further optionally 0.01% to 1%.

(4) A thickness of the coating layer is 0.5 nm to 30 nm, and optionally 1 nm to 5 nm.

By controlling the thickness of the coating layer and the mass percent of the coating layer in the positive electrode material to fall within an appropriate range, the following beneficial effects are achieved: (i) ensuring a sufficient bonding force of adhesion to the sodium-containing positive electrode material substrate, avoiding the peeling of the coating layer in a long cycling process, and enhancing the structural stability of the surface of the positive electrode material; (ii) effectively isolating the sodium-containing positive electrode material substrate from the air, preventing continuous reaction between the material and the components (water and carbon dioxide) in the air, and in turn, suppressing continuous generation of residual alkali on the surface, maintaining integrity of the crystal structure of the material, and enhancing the cycle performance of the positive electrode material; and (iii) facilitating effective intercalation and deintercalation of active ions of the positive electrode material, and enabling the positive electrode material to play a stable role in the secondary battery.

A second aspect of this application provides a method for preparing a positive electrode material, including: providing a sodium-containing positive electrode material substrate; and performing surface heat treatment on the sodium-containing positive electrode material substrate by using vapor of a coating modifier, so as to form a $Na_xM_yO_2$-containing coating layer on at least a part of the surface of the sodium-containing positive electrode material substrate and obtain a positive electrode material, where M includes at least one of B, Si, or P, $x > 0$, and $y > 0$. Net charge of the $Na_xM_yO_2$ is zero.

The method according to this application performs surface heat treatment on the sodium-containing positive electrode material substrate by using the vapor of the coating modifier. In this way, the vapor of the coating modifier is caused to react with the residual alkali on the surface of the sodium-containing positive electrode material substrate to generate a coating layer that contains a $Na_xM_yO_2$ oxide component, thereby reducing the residual alkali on the surface of the sodium-containing positive electrode material substrate, isolating the sodium-containing positive electrode material substrate from the air through the coating layer, and in turn, preventing the exposure the substrate to the air, preventing continuous generation of residual alkali on the surface, reducing the loss of the irreversible capacity of the sodium-ion secondary battery, and enhancing the cycle performance.

In some embodiments, the performing surface heat treatment on the sodium-containing positive electrode material substrate by using vapor of a coating modifier includes: sintering the sodium-containing positive electrode material substrate and the coating modifier, causing the sodium-containing positive electrode material substrate to contact and react with the vapor of the coating modifier, and forming a transition layer and an oxide layer on at least a part of the surface of the sodium-containing positive electrode material substrate, where the transition layer is relatively close to the sodium-containing positive electrode material substrate, and the oxide layer is relatively far away from the sodium-containing positive electrode material substrate; and the transition layer includes an element M-doped region, and the oxide layer includes a $Na_xM_yO_2$ oxide component.

In the above steps, by sintering the sodium-containing positive electrode material substrate and the coating modifier, the coating modifier can be continuously volatilized to form vapor, and can continuously contact and react with the sodium-containing positive electrode material substrate to form a $Na_xM_yO_2$ oxide component, thereby reducing the residual alkali substances on the surface of the positive electrode material through the reaction. At the same time, during the sintering, the elements in the coating modifier spontaneously diffuse to the superficial layer of the sodium-containing positive electrode material substrate under the action of thermodynamics, thereby forming a superficially doped transition layer between the sodium-containing positive electrode material substrate and the coating layer, and also forming an M-doped region in the transition layer. In the M-doped region, the element M can combine with the sodium-containing positive electrode material substrate to form a chemical bond, thereby effectively increasing the bonding force between the coating layer and the sodium-containing positive electrode material substrate, avoiding the peeling of the coating layer from the positive electrode material in a long cycling process, enhancing the stability of the surface, and in turn, enhancing the cycle stability.

In some embodiments of this application, the method satisfies at least one of the following conditions:

(1) the coating modifier includes one or more of a boric acid, a boron oxide, a silicic acid, or ammonium dihydrogen phosphate;
(2) the sodium-containing positive electrode material substrate includes one or more of a layered oxide, a Prussian blue compound, or a polyanionic compound, and is optionally an O3-type layered oxide;
(3) a mass ratio between the coating modifier and the sodium-containing positive electrode material substrate is m, satisfying: $0 < m < 2$, and optionally $0.05 \leq m \leq 1$; and
(4) during the sintering, the coating modifier is in a solid phase or a liquid phase, and is optionally in a solid phase.

By controlling the mass ratio m between the coating modifier and the sodium-containing positive electrode material substrate to fall within an appropriate range, this application not only achieves a good coating effect for the sodium-containing positive electrode material substrate, but also maintains the capacity of the material at a relatively high level, thereby achieving a trade-off between the capacity performance and the coating effect. In addition, the coating modifier is in a solid phase or a liquid phase, and contains no moisture, and the vapor formed by sintering the coating modifier contains no water vapor, thereby avoiding the contact between the sodium-containing positive electrode material substrate and moisture. This can effectively reduce the residual alkali substances on the surface while maintaining integrity of the crystal structure of the material, thereby enhancing the cycle performance of the positive electrode material.

In some embodiments of this application, the sintering the sodium-containing positive electrode material substrate and the coating modifier includes: providing a first container, where the first container contains the coating modifier and a second container, the second container contains the sodium-containing positive electrode material substrate, and a gas phase of the first container communicates with a gas phase of the second container; and sintering the first container.

By sintering the first container in which the second container and the coating modifier are contained, the coating modifier can be volatilized to form vapor. Because the gas phase of the first container communicates with the gas phase of the second container, the formed vapor can diffuse into the second container, and contact and react with the sodium-containing positive electrode material substrate in the second container, thereby gradually forming a coating layer through continuous reaction during the continuous sintering.

In some embodiments of this application, the providing a first container includes: providing the second container; placing the second container into the first container; and laying the coating modifier in at least a part of a region between the first container and an outer wall of the second container. Optionally, a thickness of the laid coating modifier is not greater than 2 cm.

The thickness of the laid coating modifier not greater than 2 cm facilitates sufficient and continuous volatilization of the coating modifier during the sintering, and in turn. In this way, the coating modifier can sufficiently react with the residual alkali on the surface of the sodium-containing positive electrode material substrate, and achieve a good coating effect for the sodium-containing positive electrode material substrate.

In some embodiments of this application, the method satisfies at least one of the following conditions:

(1) the sintering is performed at a temperature of $T_1$, $0 < T_1 < 2000$ °C, and optionally $200$ °C $\leq T_1 \leq 800$ °C;
(2) the sintering continues for a time of ti, $0 < t_1 < 36$ h, and optionally $1$ h $\leq t_1 \leq 18$ h; and
(3) the first container and the second container each is independently a crucible.

By controlling the sintering temperature $T_1$ and the sintering time $t_1$ to fall within an appropriate range, this application not only implements sufficient reaction between the vapor of the coating modifier and the sodium-containing positive electrode material substrate, but also prevents the crystal structure of the material from being disrupted by the loss of Na from the sodium-containing positive electrode material substrate, thereby further improving the cycle performance.

In some embodiments of this application, the sintering the sodium-containing positive electrode material substrate and the coating modifier includes: heat-treating the coating modifier to form vapor of the coating modifier; passing the vapor of the coating modifier into a rotary kiln containing the sodium-containing positive electrode material substrate; and sintering the vapor of the coating modifier passed into the rotary kiln and the sodium-containing positive electrode material substrate.

In the above steps, the coating modifier is heat-treated first to continuously volatilize the coating modifier to form vapor. At the same time, the vapor is passed into the rotary kiln that contains the sodium-containing positive electrode material substrate. The vapor of the coating modifier can contact and react with the sodium-containing positive electrode material substrate to gradually form a coating layer through continuous reaction during the continuous sintering. The rotary kiln can disperse the sodium-containing positive electrode material substrate during the continuous rotation to increase uniformity of the coating layer formed on the surface of the substrate.

In some embodiments of this application, the method satisfies at least one of the following conditions:

(1) the sintering is performed at a temperature of $T_2$, $0 < T_2 < 1000$ °C, and optionally $200$ °C $\leq T_2 \leq 800$ °C; and
(2) the sintering continues for a time of $t_2$, $0 < t_2 < 36$ h, and optionally $1$ h $\leq t_2 \leq 18$ h.

By controlling the sintering temperature $T_2$ and the sintering time $t_2$ to fall within an appropriate range, this application not only implements sufficient reaction between the vapor of the coating modifier and the sodium-containing positive electrode material substrate, but also prevents the crystal structure of the material from being disrupted by the loss of Na from the sodium-containing positive electrode material substrate, thereby further improving the cycle performance.

In some embodiments of this application, the method satisfies at least one of the following conditions:

(1) the heat treatment is performed at a temperature of $T_3$, $300 < T_3 < 2000$ °C, and optionally $400$ °C $\leq T_3 \leq 1800$ °C;
(2) a rotation speed of the rotary kiln is R, $0$ r/min $< R \leq 15$ r/min, and optionally $3$ r/min $\leq R \leq 8$ r/min; and
(3) a flow rate of the vapor of the coating modifier is v, $0$ ml/min $< v \leq 5$ ml/min, and optionally $0.5$ ml/min $\leq v \leq 2$ ml/min.

By controlling the heat treatment temperature $T_3$ to fall within an appropriate range, this application causes the coating modifier to volatilize continuously and form vapor continuously, so as to sufficiently react with the residual alkali substances on the surface of the sodium-containing positive electrode material substrate.

A third aspect of this application provides a positive electrode plate. The positive electrode plate includes the positive electrode material according to the first aspect of this application or a positive electrode material prepared by the method according to the second aspect of this application.

A fourth aspect of this application provides a secondary battery. The secondary battery includes the positive electrode plate according to the third aspect of this application.

A fifth aspect of this application provides an electrical device, including the secondary battery according to the fourth aspect of this application.

The details of one or more embodiments of this application are set forth in the drawings and description below. Other features, objectives, and advantages of this application will become evident in the specification, drawings, and claims.

## BRIEF DESCRIPTION OF DRAWINGS

FIG. 1 is a schematic structural diagram of an apparatus for preparing a positive electrode material according to an embodiment of this application;

FIG. 2 is a schematic structural diagram of an apparatus for preparing a positive electrode material according to another embodiment of this application;

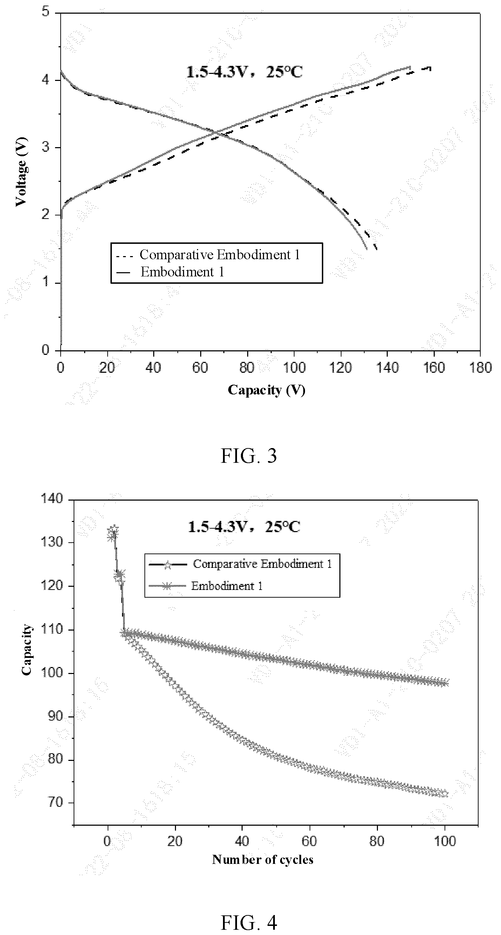

FIG. 3 shows a first-cycle charge capacity curve and a first-cycle discharge capacity curve of a sodium-ion battery according to Embodiment 1 versus Comparative Embodiment 1 of this application;

FIG. 4 shows a cycle performance curve of a sodium-ion battery according to Embodiment 1 versus Comparative Embodiment 1 of this application;

FIG. 5 is a SEM image of a positive electrode material according to Embodiment 1 versus Comparative Embodiment 1 of this application;

FIG. 6 is a schematic diagram of a secondary battery according to an embodiment of this application.

FIG. 7 is a schematic exploded view of a secondary battery according to an embodiment of this application;

FIG. 8 is a schematic diagram of a secondary battery according to still another embodiment of this application;

FIG. 9 is a schematic diagram of a secondary battery according to another embodiment of this application;

FIG. 10 is an exploded view of FIG. 9; and

FIG. 11 is a schematic diagram of an electrical device that uses a secondary battery as a power supply according to an embodiment of this application.

**DETAILED DESCRIPTION OF EMBODIMENTS**

To make the objectives, technical solutions, and advantages of this application clearer, the following gives a clear and comprehensive description of the technical solutions of this application with reference to embodiments. Evidently, the described embodiments are merely a part of but not all of the embodiments of this application. The embodiments described herein are illustrative in nature, and are intended to enable a basic understanding of this application. No embodiment of this application is to be construed as a limitation on this application.

For brevity, some specific numerical ranges are disclosed herein for illustrative purpose only. However, any lower limit may be combined with any upper limit to form an unspecified range, any lower limit may be combined with any other lower limit to form an unspecified range, and any upper limit may be combined with any other upper limit to form an unspecified range. In addition, each separately disclosed point or single numerical value may be used as a lower limit or upper limit to combine with any other point or other single numerical value or with any other lower or upper limit to form an unspecified range.

In the description of this application, unless otherwise specified, a numerical value qualified by "at least" or "at most" includes this numerical value.

Unless otherwise specified, the terms used in this application have the well-known meanings commonly understood by a person skilled in the art. Unless otherwise specified, the value of a parameter mentioned in this application may be measured by using a measurement method commonly used in the art (for example, may be tested according to the method described in an embodiment of this application).

A list of items referred to by the terms such as "at least one of", "at least one thereof", "at least one type of" may mean any combination of the listed items. For example, if items A and B are listed, the phrases "at least one of A and B" and "at least one of A or B" mean: A alone; B alone; or both A and B. In another example, if items A, B, and C are listed, the phrases "at least one of A, B, and C" and "at least one of A, B, or C" mean: A alone; B alone; C alone; A and B (excluding C); A and C (excluding B); B and C (excluding A); or all of A, B, and C. The item A may include a single component or a plurality of components. The item B may include a single component or a plurality of components. The item C may include a single component or a plurality of components.

Currently, due to an adverse effect of a preparation process, residual alkali ($Na_2CO_3$ and NaOH) usually remains on a surface of a positive electrode material of a conventional sodium-ion secondary battery, and especially, a layered oxide positive electrode material. The residual alkali on the surface makes the material much prone to absorb moisture and deteriorate, and makes the material less compatible with a binder, thereby resulting in a decline in the dispersivity and stability of the slurry, and being unfavorable to a subsequent coating process. More importantly, the inventor finds that, when the above positive electrode material is exposed to the air for a long time, the positive electrode material continues reacting with the components (water and carbon dioxide) in the air to form residual alkali continuously on the surface of the positive electrode material. The residual alkali increases the irreversible capacity loss of the sodium-ion secondary battery, and results in continuous deterioration of the cycle performance.

A conventional method currently available for reducing the residual alkali on the surface of the sodium-ion positive electrode material is typically a water washing method or a coating method, or a combination thereof to reduce the residual alkali on the surface of the sodium-ion positive electrode material. Among such methods, although the water washing method can reduce the residual alkali on the surface, the inventor finds that, because the sodium-ion positive electrode material is extremely sensitive to moisture, simple washing will cause a larger area of an active surface of the material to be exposed to the air and give rise to more residual alkali. In this process, irreversible damage occurs, thereby deteriorating the cycle performance of the material. In addition, the inventor also finds that the water washing process of the sodium-ion positive electrode material not only washes off the residual alkali on the surface, but also washes off Na in the lattice of the material, thereby resulting in a loss of sodium and disruption of the crystal structure of the material, and failing to achieve a good washing effect. In a conventional coating method, the sodium-ion positive electrode material is typically dry-mixed and coated with and a coating agent in a conventional way. However, the inventor finds that, in the conventional dry-mix coating, as limited by the size of particles of the coating agent, the coating agent is usually applied in specific spots, thereby resulting in nonuniformity of the formed coating layer and failing to achieve a good coating effect. In addition, when the water washing method is combined with the coating method, not only the disadvantages of each of the two methods will exist, but also the entire process flow will be longer, thereby increasing the production cost.

To solve the above problems, the inventor has carried out a lot of research and hereby discloses a method for preparing a positive electrode material. The method performs surface heat treatment on a sodium-containing positive electrode material substrate by skillfully using vapor of a coating modifier. In this way, the vapor of the coating modifier is caused to react with the residual alkali on the surface of the sodium-containing positive electrode material substrate to generate a coating layer that contains $Na_xM_yO_2$, thereby reducing the residual alkali on the surface of the sodium-containing positive electrode material substrate, isolating the sodium-containing positive electrode material substrate from the air, and in turn, preventing the exposure the substrate to the air, preventing continuous generation of residual alkali on the surface, reducing the loss of the irreversible capacity of the sodium-ion secondary battery, and enhancing the cycle performance.

**Positive electrode material**

In a first aspect, an embodiment of this application provides a positive electrode material, including: a sodium-containing positive electrode material substrate; and a coating layer, covering at least a part of a surface of the sodium-containing positive electrode material substrate, where the coating layer includes $Na_xM_yO_2$, M includes at least one of B, Si, or P, x > 0, and y > 0. Net charge of the $Na_xM_yO_2$ is zero.

In this embodiment of this application, that the net charge of $Na_xM_yO_2$ is zero means that, in a system formed of $Na_xM_yO_2$, an algebraic sum of a total number of charges carried by sodium ions and a total number of negative charges carried by M ions and oxygen ions is zero. The net charge of $Na_xM_yO_2$ may be characterized and tested by an X-ray photoelectron spectrometer (XPS).

The positive electrode material according to this application includes a sodium-containing positive electrode material substrate and a $Na_xM_yO_2$-containing coating layer. The $Na_xM_yO_2$ formed in the coating layer can consume residual alkali ($Na_2CO_3$ and NaOH) on the surface of the sodium-containing positive electrode material substrate, reduce the content of the residual alkali ($Na_2CO_3$ and NaOH) on the surface, reduce the irreversible capacity loss of the positive electrode material caused by the residual alkali on the surface, and enhance the cycle performance. In addition, the coating layer can isolate the sodium-containing positive electrode material substrate from the air, avoid exposure of the sodium-containing positive electrode material substrate to the air, and prevent continuous reaction of the material with components (water and carbon dioxide) in the air, thereby suppressing continuous generation of the residual alkali on the surface, maintain integrity of a crystal structure of the material, and in turn, enhancing the cycle performance of the positive electrode material.

In some embodiments, a content of residual alkali on a surface of the positive electrode material is 0.5 wt% to 5.5 wt%. For example, the content of residual alkali on the surface of the positive electrode material may be 1.0%, 1.5%, 2.0%, 2.5%, 3.0%, 3.5%, 4.0%, 4.5%, 5.0%, or a value falling within a range formed by any two thereof. Optionally, the content of residual alkali on the surface of the positive electrode material is 0.8 wt% to 4.5 wt%.

In this embodiment of this application, the content of residual alkali on the surface of the positive electrode material means a mass percent of an aggregate of $Na_2CO_3$, NaOH, and other trace alkaline substances (if any) contained on the surface of the positive electrode material based on the mass of the positive electrode material, and may be quantitatively characterized and measured by an acid-base titration method. Here is an non-restrictive example of the acid-base titration method: dissolving a specified amount of sodium-containing positive electrode material substrate in water to obtain a sample solution, adding a mixed solution of methyl orange and phenolphthalein as an indicator to indicate color change of the sample solution, adding a standard hydrochloric acid solution into the sample solution until the sample solution changes from purple to red indicative of an endpoint of titration, and calculating the content of residual alkali on the surface of the positive electrode material based on the concentration of the standard hydrochloric acid solution and the volume consumed during the titration.

In some embodiments, the coating layer includes: a transition layer relatively close to the sodium-containing positive electrode material substrate, where the transition layer includes an M-doped region; and an oxide layer relatively away from the sodium-containing positive electrode material substrate, where the oxide layer includes $Na_xM_yO_2$.

The coating layer may include a transition layer and an oxide layer. The transition layer can effectively enhance the bonding force between the coating layer and the sodium-containing positive electrode material substrate, avoid peeling of the coating layer in a long cycling process, and enhance structural stability of the surface of the positive electrode material. In addition, the M-doped region contained in the coating layer is a superficial M-doped region close to the sodium-containing positive electrode material substrate. The superficial doping can form a chemical bond between the element M and the sodium-containing positive electrode material substrate, thereby further increasing the bonding force of adhesion to the sodium-containing positive electrode material substrate, enhancing the structural stability of the surface of the positive electrode material, and in turn, enhancing the cycle stability. Therefore, the oxide layer formed can consume residual alkali ($Na_2CO_3$ and NaOH) on the surface of the sodium-containing positive electrode material substrate, reduce the content of the residual alkali ($Na_2CO_3$ and NaOH) on the surface, reduce the irreversible capacity loss of the positive electrode material caused by the residual alkali on the surface, and further enhance the cycle performance.

In an embodiment of this application, the decrease in the content of residual alkali on the surface of the sodium-containing positive electrode material substrate may be qualitatively measured by a scanning electron microscope (SEM). Specifically, as observed in a SEM, the residual alkali on the surface of the sodium-containing positive electrode material substrate usually assumes a shape of dense dots or fine chips on the surface of the particles. After the residual alkali is reduced, a significant decrease of the dense dots or fine chips on the surface of the particles can be seen intuitively.

In some embodiments, based on a total mass of the coating layer, a mass percent of the element M in the doped region is greater than the mass percent of the element M in the oxide layer. Optionally, the mass percent of the element M in the doped region is 0.05 wt% to 0.3 wt%. For example, the mass percent of the element M in the transition layer may be 0.1%, 0.15%, 0.2%, 0.25%, or a value falling within a range formed by any two thereof.

In an embodiment of this application, the M-doped region means a specified doped region that is spread in the transition layer. In the specified doped region, the content of the element M is significantly higher than the content of other elements. The content of the element M contained in the specified doped region is also significantly higher than that in other regions in the transition layer.

The mass percent of the element M in the doped region bears the meaning known in the art, and may be measured by using an instrument and method known in the art. For example, the mass percent may be measured by an energy dispersive spectrometer (EDS). To be specific, an EDS test may be performed on the M-doped region in the coating layer and the transition layer to quantitatively analyze the mass percent of the element M in the doped region.

The mass percent of the element M in the M-doped region is greater than the mass percent of the element M in the oxide layer, thereby facilitating formation of more chemical bonds between the element M and the sodium-containing positive electrode material substrate, and in turn, further increasing the bonding force between the coating layer and the sodium-containing positive electrode material substrate, and enhancing cycle stability.

In some embodiments, the sodium-containing positive electrode material substrate may include one or more of a layered oxide, a Prussian blue compound, or a polyanionic compound. However, this application is not limited to such materials, and the sodium-containing positive electrode material substrate may be made of other conventional materials known as suitable for use as a positive active material of a sodium-ion battery.

In some embodiments, the layered oxide may be $Na_xM1_yO_2$, where $x > 0$, $y > 0$, and M1 may be one or more of Li, Mg, Al, Si, K, Ca, Sc, Ti, V, Cr, Fe, Ni, Co, Mn, Cu, Zn, Sr, Y, Zr, Nb, Mo, Bi, or La. Optionally, in view of the significance of the residual alkali problem occurring on the sodium-containing positive electrode material substrate, the layered oxide in this application may be an O3-type layered oxide.

In some embodiments, the layered oxide is expressed by a chemical formula $Na_xMn_aFe_bNi_cL_dO_{2-e}$, where, $0.7 < x \leq 1$, $0 < a$, $0 \leq b$, $0.1 < c \leq 0.3$, $0 \leq d$, $a + b + c + d + e = 1$, $-0.1 \leq e \leq 0.1$, and L is one or more selected from Cu, Li, Ti, Zr, K, Nb, Mg, Ca, Mo, Zn, Cr, W, Bi, Sn, Ge, Al, Si, La, Ta, P, or B.

In an embodiment of this application, the O3-type represents a face-centered cubic stacking crystal structure, where the layers are stacked in an ABCABC pattern. In the O3-type layered oxide, "O" represents an octahedral coordination environment in which the sodium ion is located (O represents octahedron). The numerical value "3" represents the number of $TMO_2$ sheets in a single unit cell (TM represents transition metal element). To be specific, a sodium layer and a transition metal layer are alternately stacked on two sides of an oxygen layer, Na occupies a 3a position in the unit cell, O occupies a 6a position in the unit cell, and the transition metal occupies a 3b position in the unit cell.

In some embodiments, the polyanionic compound may be a type of compound containing a sodium ion, a transition metal ion, and a tetrahedral $(YO4)^{n-}$ anion unit. The transition metal may be at least one of Mn, Fe, Ni, Co, Cr, Cu, Ti, Zn, V, Zr, or Ce; Y may be at least one of P, S, or Si; and n denotes a valence of $(YO4)^{n-}$.

In some embodiments, alternatively, the polyanionic compound may be a type of compound containing a sodium ion, a transition metal ion, a tetrahedral $(YO4)^{n-}$ anion unit, and a halogen anion. The transition metal may be at least one of Mn, Fe, Ni, Co, Cr, Cu, Ti, Zn, V, Zr, or Ce; Y may be at least one of P, S, or Si; n denotes a valence of $(YO4)^{n-}$; and the halogen may be at least one of F, Cl, or Br.

In some embodiments, alternatively, the polyanionic compound may be a type of compound containing a sodium ion, a tetrahedral $(YO4)^{n-}$ anion unit, a polyhedral unit $(ZOy)^{m+}$, and optionally a halogen anion. Y may be at least one of P, S, or Si; n denotes a valence of $(YO4)^{n-}$; Z denotes transition metal, and may be at least one of Mn, Fe, Ni, Co, Cr, Cu, Ti, Zn, V, Zr, or Ce; m denotes a valence of $(Zoy)^{m+}$; and the halogen may be at least one of F, Cl, or Br.

As a specific example, the polyanionic compound may be at least one of $NaFePO_4$, $Na_3V_2(PO_4)_3$ (sodium vanadium phosphate, NVP for short), $Na_4Fe_3(PO_4)_2(P_2O_7)$, $NaM'PO_4F$ (M' is one or more of V, Fe, Mn, or Ni), or $Na_3(VO_y)_2(PO_4)_2F_{3-2y}$ ($0 \leq y \leq 1$).

In some embodiments, the Prussian blue compound may be a compound containing a sodium ion, a transition metal ion, or a cyano ion (CN'). The transition metal may be at least one of Mn, Fe, Ni, Co, Cr, Cu, Ti, Zn, V, Zr, or Ce. For example, the Prussian blue compound may be $Na_aMe_bMe'_c(CN)_6$, where Me and Me' each are independently at least one of Ni, Cu, Fe, Mn, Co, or Zn, $0 < a \leq 2$, $0 < b < 1$, and $0 < c < 1$.

In some embodiments, the sodium-containing positive electrode material substrate is a micron-scale particle. An average particle diameter of the micron-scale particle is 1 μm to 25 μm. For example, the average particle diameter of the micron-scale particle may be 3 μm, 5 μm, 7 μm, 9 μm, 11 μm, 13 μm, 15 μm, 17 μm, 19 μm, 21 μm, 23 μm, or a value falling within a range formed by any two thereof. Optionally, the average particle diameter of the micron-scale particle is 1 μm to 15 μm.

The average particle diameter of the micron-scale particle of the positive electrode material substrate bears the meaning well known in the art, and may be measured by an instrument and method well known in the art. For example, the average particle diameter may be measured conveniently by using a laser particle size analyzer such as a Mastersizer 2000E laser particle size analyzer of Britain-based Malvern Instruments Ltd. with reference to the standard GB/T 19077-2016 *Particle Size Analysis-Laser Diffraction Methods.*

The average diameter of the micron-scale particles of the sodium-containing positive electrode material substrate affects the average diameter of the manufactured positive electrode material particles. By controlling the average diameter of the micron-scale particles to fall within an appropriate range, the average diameter of the positive electrode material particles can also be caused to fall within an appropriate range, thereby facilitating close contact and arrangement of the positive electrode material particles during formation of the positive film layer, and in turn, increasing the content of the positive electrode material per unit volume of the positive film layer, and increasing the energy density of the secondary battery.

In some embodiments, the mass percent of the coating layer in the positive electrode material is 0.001% to 3%. For example, the mass percent of the coating layer in the positive electrode material may be 0.005%, 0.01%, 0.05%, 0.1%, 0.5%, 1%, 1.5%, 2%, 2.5%, or a value falling within a range formed by any two thereof. Optionally, the mass percent of the coating layer in the positive electrode material is 0.01% to 2%, and further optionally 0.01% to 1%.

The mass percent of the coating layer in the positive electrode material bears the meaning well known in the art, and may be determined by an instrument and method well known in the art. For example, a mass percent of a coating element in a microregion of the positive electrode material is measured by using a transmission electron microscope (TEM) together with an energy dispersive spectrometer (EDS). Based on the measured mass percent, the mass percent of the coating layer in the positive electrode material is calculated. Alternatively, an aggregate mass percent of the coating element in the positive electrode material is measured by an inductively coupled plasma emission spectrometer (ICP), and then the mass percent of the coating element located inside the coating layer of the positive electrode material is measured by an X-ray photoelectron spectrometer (XPS), and is subtracted from the aggregate mass percent to obtain the mass percent of the coating layer in the positive electrode material.

In some embodiments, the thickness of the coating layer is 0.5 nm to 30 nm. For example, the thickness of the coating layer is 1 $\mu$m, 5 $\mu$m, 10 $\mu$m, 15 $\mu$m, 20 $\mu$m, 25 $\mu$m, or a value falling within a range formed by any two thereof. Optionally, the thickness of the coating layer is 1 nm to 5 nm.

The thickness of the coating layer bears the meaning well known in the art, and may be measured by an instrument and method well known in the art. For example, the thickness of the coating layer may be measured by using a transmission electron microscope (TEM).

By controlling the thickness of the coating layer and the mass percent of the coating layer in the positive electrode material to fall within an appropriate range, the following beneficial effects are achieved: (i) ensuring a sufficient bonding force of adhesion to the sodium-containing positive electrode material substrate, avoiding the peeling of the coating layer in a long cycling process, and enhancing the structural stability of the surface of the positive electrode material; (ii) effectively isolating the sodium-containing positive electrode material substrate from the air, preventing continuous reaction between the material and the components (water and carbon dioxide) in the air, and in turn, suppressing continuous generation of residual alkali on the surface, maintaining integrity of the crystal structure of the material, and enhancing the cycle performance of the positive electrode material; and (iii) facilitating effective intercalation and deintercalation of active ions of the positive electrode material, and enabling the positive electrode material to play a stable role in the secondary battery.

In a second aspect, an embodiment of this application provides a method for preparing a positive electrode material, including the following steps:

S10. Providing a sodium-containing positive electrode material substrate; and
S20. Performing surface heat treatment on the sodium-containing positive electrode material substrate by using vapor of a coating modifier, so as to form a $Na_xM_yO_2$-containing coating layer on at least a part of the surface of the sodium-containing positive electrode material substrate and obtain a positive electrode material, where M includes at least one of B, Si, or P, x > 0, and y > 0. Net charge of the $Na_xM_yO_2$ is zero.

The method according to this application performs surface heat treatment on the sodium-containing positive electrode material substrate by using the vapor of the coating modifier. In this way, the vapor of the coating modifier is caused to react with the residual alkali on the surface of the sodium-containing positive electrode material substrate to generate a coating layer that contains a $Na_xM_yO_2$, thereby reducing the residual alkali on the surface of the sodium-containing positive electrode material substrate, isolating the sodium-containing positive electrode material substrate from the air through the coating layer, and in turn, preventing the exposure the substrate to the air, preventing continuous generation of residual alkali on the surface, reducing the loss of the irreversible capacity of the sodium-ion secondary battery, and enhancing the cycle performance.

In addition, in contrast to the conventional water washing method, this application uses the vapor of the coating modifier to perform surface heat treatment on the sodium-containing positive electrode material substrate to reduce the residual alkali on the surface, thereby avoiding direct contact between the sodium-containing positive electrode material substrate and water, preventing the water washing process from causing damage to the crystal structure of the positive electrode material, avoiding irreversible damage to the positive electrode material, and further enhancing the cycle performance of the secondary battery.

In addition, in contrast to the conventional dry-mixing coating method, this application uses the vapor of the coating modifier to contact and react with the sodium-containing positive electrode material substrate, thereby saving the step of dry-mixing of the positive electrode material and the coating agent, shortening the time of contact between the positive electrode material and the air, and reducing the residual alkali generated. Moreover, in the dry-mix coating, as limited by the size of the coating agent particles, the coating agent is usually applied in specific spots, thereby resulting in nonuniformity of the formed coating layer and an inferior effect of isolation from the air. In contrast, a gas-phase coating process of this application implements sufficient contact and reaction between the coating modifier and the surface of the positive electrode material, thereby forming a relatively uniform coating layer, and achieving a good effect of isolation from the air.

Further, compared with the conventional method that combines the water washing with coating, the method provided in this application can form a coating layer while reducing the residual alkali on the surface of the positive electrode material. In other words, the reduction of the residual alkali on the surface of the positive electrode material and the formation of the coating layer are performed in just a single step, that is, a surface heat treatment step, thereby shortening the process flow and reducing the impact of the entire process flow on the performance of the positive electrode material.

In some embodiments, in step S20, the performing surface heat treatment on the sodium-containing positive electrode material substrate by using vapor of a coating modifier includes the following steps:

S200. Sintering the sodium-containing positive electrode material substrate and the coating modifier, causing the sodium-containing positive electrode material substrate to contact and react with the vapor of the coating modifier, and forming a transition layer and an oxide layer on at least a part of the surface of the sodium-containing positive electrode material substrate, where the transition layer is relatively close to the sodium-containing positive electrode material substrate, and the oxide layer is relatively far away from the sodium-containing positive electrode material substrate; and the transition layer includes an element M-doped region, and the oxide layer includes a $Na_xM_yO_2$.

In step S200, by sintering the sodium-containing positive electrode material substrate and the coating modifier, the coating modifier can be continuously volatilized to form vapor, and can continuously contact and react with the sodium-containing positive electrode material substrate to form a $Na_xM_yO_2$, thereby reducing the residual alkali substances on the surface of the positive electrode material through the reaction. At the same time, during the sintering, the elements in the coating modifier spontaneously diffuse to the superficial layer of the sodium-containing positive electrode material substrate under the action of thermodynamics, thereby forming a superficially doped transition layer between the sodium-containing positive electrode material substrate and the coating layer, and also forming an M-doped region in the transition layer. In the M-doped region, the element M can combine with the sodium-containing positive electrode material substrate to form a chemical bond, thereby effectively increasing the bonding force between the coating layer and the sodium-containing positive electrode material substrate, avoiding the peeling of the coating layer from the positive electrode material in a long cycling process, enhancing the stability of the surface, and in turn, enhancing the cycle stability.

In some embodiments, the sodium-containing positive electrode material substrate may include one or more of a layered oxide, a Prussian blue compound, or a polyanionic compound. However, this application is not limited to such materials, and the sodium-containing positive electrode material substrate may be made of other conventional materials known as suitable for use as a positive active material of a sodium-ion battery. Optionally, in view of the significance of the residual alkali problem occurring on the surface of the sodium-containing positive electrode material substrate, the layered oxide in this application may be an O3-type layered oxide.

In some embodiments, the type of the coating modifier is not particularly limited, as long as the coating modifier is volatile enough to form vapor and interact with the residual alkali substances on the surface of the sodium-containing positive electrode material substrate during the sintering. For example, the coating modifier may be one or more of a boric acid, a boron oxide, a silicic acid, or ammonium dihydrogen phosphate.

In some embodiments, during the sintering, the coating modifier is in a solid phase or a liquid phase, and is optionally in a solid phase. The coating modifier is in a solid phase or a liquid phase, and contains no moisture, and the vapor formed by sintering the coating modifier contains no water vapor, thereby avoiding the contact between the sodium-containing positive electrode material substrate and moisture. This can effectively reduce the residual alkali substances on the surface while maintaining integrity of the crystal structure of the material, thereby enhancing the cycle performance of the positive electrode material.

In some embodiments, a mass ratio between the coating modifier and the sodium-containing positive electrode material substrate is m, satisfying: $0 < m < 2$. For example, the mass ratio between the coating modifier and the sodium-containing positive electrode material substrate may be 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, or a value falling within a range formed by any two thereof. Optionally, the mass ratio between the coating modifier and the sodium-containing positive electrode material substrate is $0.05 \leq m \leq 1$.

By controlling the mass ratio m between the coating modifier and the sodium-containing positive electrode material substrate to fall within an appropriate range, this application not only achieves a good coating effect for the sodium-containing positive electrode material substrate, but also maintains the capacity of the material at a relatively high level, thereby achieving a trade-off between the capacity performance and the coating effect. When the value of m is large, the mass percent of the coating modifier is relatively high, the mass percent of the sodium-containing positive electrode material substrate will decrease, and the capacity will decline. When the value of m is small, it may be difficult to achieve a good coating effect.

In some embodiments, in step S200, the sintering the sodium-containing positive electrode material substrate and the coating modifier may include the following steps:

S2010. Providing a second container, where the second container contains the sodium-containing positive electrode material substrate;
S2020. Placing the second container into the first container, where a gas phase of the first container communicates with a gas phase of the second container;
S2030. Laying the coating modifier in at least a part of a region between the first container and an outer wall of the second container; and
S2040. Sintering the first container.

In steps S2010 to S2040 above, by sintering the first container in which the second container and the coating modifier are contained, the coating modifier can be volatilized to form vapor. Because the gas phase of the first container communicates with the gas phase of the second container, the formed vapor can diffuse into the second container, and contact and react with the sodium-containing positive electrode material substrate in the second container, thereby gradually forming a coating layer through continuous reaction during the continuous sintering.

In some embodiments, the types of the first container and the second container are not particularly limited, as long as the first container can accommodate the second container, and the two containers can implement gas phase communication and withstand high-temperature sintering. For example, the first container and the second container each may be independently a crucible.

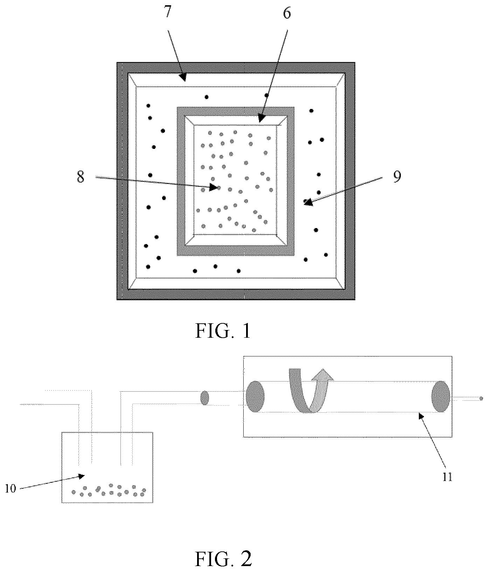

As a non-restrictive example of the apparatus for preparing a positive electrode material, as shown in FIG. 1, which is a schematic structural diagram of an apparatus for preparing a positive electrode material in steps S2010 to S2040, an operating process of the apparatus may be: placing the sodium-containing positive electrode material substrate 8 into a second crucible 6, and then placing the second crucible 6 into a first crucible 7, laying a coating modifier 9 evenly in a region between the first crucible 7 and an outer wall of the second crucible 6, and then covering the first crucible 7, and finally, sintering the first crucible.

In some embodiments, the thickness of the laid coating modifier is not particularly limited, and may be adjusted according to the height and volume of the container in an actual use. Optionally, in order to continuously obtain the vapor of the coating modifier, the thickness of the laid coating modifier is not greater than 2 cm. For example, the thickness of the laid coating modifier may be 2 cm, 1.9 cm, 1.8 cm, 1.7 cm, 1.6 cm, 1.5 cm, 1.4 cm, 1.3 cm, 1.2 cm, 1.1 cm, 1.0 cm, 0.9 cm, 0.8 cm, 0.7 cm, 0.6 cm, 0.5 cm, 0.4 cm, 0.3 cm, 0.2 cm, 0.1 cm, or a value falling within a range formed by any two thereof.

In some embodiments, the sintering temperature is $T_1$, satisfying: $0 < T_1 < 2000$ °C. For example, $T_1$ may be 50 °C, 100 °C, 200 °C, 300 °C, 400 °C, 500 °C, 600 °C, 700 °C, 800 °C, 900 °C, 1000 °C, 1100 °C, 1200 °C, 1300 °C, 1400 °C, 1500 °C, 1600 °C, 1700 °C, 1800 °C, 1900 °C, or a value falling within a range formed by any two thereof. Optionally, the sintering temperature is: $200$ °C $\leq T_1 \leq 800$ °C. By controlling the sintering temperature $T_1$ to fall within an appropriate range, this application not only causes the coating modifier to volatilize and form vapor, but also prevents the crystal structure of the material from being disrupted by the loss of Na from the sodium-containing positive electrode material substrate, thereby improving the cycle performance.

In some embodiments, the sintering time is ti, satisfying: $0 < t_1 < 36$ h. For example, $t_1$ may be 1 h, 2 h, 8 h, 12 h, 16 h, 20 h, 24 h, 28 h, 32 h, 35 h, or a value falling within a range formed by any two thereof. Optionally, the sintering time satisfies: $1$ h $\leq t_1 \leq 18$ h. By controlling the sintering time $t_1$ to fall within an appropriate range, this application not only implements sufficient reaction between the vapor of the coating modifier and the sodium-containing positive electrode material substrate, but also prevents the crystal structure of the material from being disrupted by the loss of Na from the sodium-containing positive electrode material substrate, thereby further improving the cycle performance.

In some embodiments, alternatively, in step S200, the sintering the sodium-containing positive electrode material substrate and the coating modifier may include the following steps:

S2100. Heat-treating the coating modifier to form vapor of the coating modifier;
S2200. Passing the vapor of the coating modifier into a rotary kiln containing the sodium-containing positive electrode material substrate; and

S2300. Sintering the vapor of the coating modifier passed into the rotary kiln and the sodium-containing positive electrode material substrate.

In steps S2100 to S2300 above, the coating modifier is heat-treated first to continuously volatilize the coating modifier to form vapor. At the same time, the vapor is passed into the rotary kiln that contains the sodium-containing positive electrode material substrate. The vapor of the coating modifier can contact and react with the sodium-containing positive electrode material substrate to gradually form a coating layer through continuous reaction during the continuous sintering. The rotary kiln can disperse the sodium-containing positive electrode material substrate during the continuous rotation to increase uniformity of the coating layer formed on the surface of the substrate.

As a non-restrictive example of the apparatus for preparing a positive electrode material, as shown in FIG. 2, which is a schematic structural diagram of the apparatus for preparing a positive electrode material in steps S2100 to S2300 above, an operating process of the apparatus may be: passing compressed air into a piece of heating equipment 10, and heat-treating the coating modifier in the heating equipment 10 to form vapor, so that the compressed air carrying the vapor of the coating modifier enters a rotary kiln 11 and contacts and reacts with the sodium-containing positive electrode material substrate in the rotary kiln 11, and so that a coating layer is gradually formed through continuous reaction during continuous sintering of the rotary kiln 11. In the above process, the concentration of vapor passed into the rotary kiln can be adjusted by controlling the flow rate of compressed air.

In some embodiments, the amount of the sodium-containing positive electrode material substrate loaded in the rotary kiln is not particularly limited, as long as the sodium-containing positive electrode material substrate can be uniformly dispersed. Optionally, in order to achieve a good dispersion effect, the amount of the sodium-containing positive electrode material substrate loaded in the rotary kiln may be not greater than 1/2 of the volume of the rotary kiln tube.

Understandably, all the operations in steps S2100 to S2300 above in this application occur simultaneously. Therefore, the sequence of steps S2100, S2200, and S2300 is not particularly limited.

In some embodiments, the heat treatment temperature is $T_3$, satisfying: 300 °C < $T_3$ < 2000 °C. For example, $T_3$ may be 400 °C, 500 °C, 600 °C, 700 °C, 800 °C, 900 °C, 1000 °C, 1100 °C, 1200 °C, 1300 °C, 1400 °C, 1500 °C, 1600 °C, 1700 °C, 1800 °C, 1900 °C, or a value falling within a range formed by any two thereof. Optionally, the heat treatment temperature satisfies: 400 °C ≤ $T_3$ ≤ 1800 °C. By controlling the heat treatment temperature to fall within an appropriate range, this application causes the coating modifier to volatilize continuously and form vapor continuously, so as to sufficiently react with the residual alkali substances on the surface of the sodium-containing positive electrode material substrate.

In some embodiments, the flow rate of the vapor of the coating modifier is v, satisfying: 0 ml/min < v ≤ 5 ml/min. For example, the flow rate of the vapor of the coating modifier may be 0.5 ml/min, 1.0 ml/min, 1.5 ml/min, 2.0 ml/min, 2.5 ml/min, 3.0 ml/min, 3.5 ml/min, 4.0 ml/min, 4.5 ml/min, or a value falling within a range formed by any two thereof. Optionally, the flow rate of the vapor of the coating modifier satisfies: 0.5 ml/min < v ≤ 2 ml/min.

By adjusting the flow rate of the vapor of the coating modifier to fall within an appropriate range, this application controls the concentration of the vapor of the coating modifier contacting and reacting with the sodium-containing positive electrode material substrate to fall within an appropriate range, thereby controlling of the aggregate dosage of the coating modifier during the reaction, and facilitating sufficient reaction between the coating modifier and the residual alkali substances on the surface of the sodium-containing positive electrode material substrate.

In some embodiments, a rotation speed of the rotary kiln is R, satisfying: 0 r/min < R ≤ 15 r/min. For example, R may be 1 r/min, 3 r/min, 5 r/min, 7 r/min, 9 r/min, 11 r/min, 13 r/min, or a value falling within a range formed by any two thereof. Optionally, R is 0.5 r/min to 2 r/min.

By controlling the rotation speed R of the rotary kiln to fall within an appropriate range, this application causes the sodium-containing positive electrode material substrate to contact the vapor of the coating modifier under the action of a suitable dispersion force, and facilitates implementation of uniform coating.

In some embodiments, the sintering temperature is $T_2$, satisfying: 0 < $T_2$ < 1000 °C. For example, $T_2$ may be 50 °C, 100 °C, 150 °C, 200 °C, 250 °C, 300 °C, 350 °C, 400 °C, 450 °C, 500 °C, 550 °C, 600 °C, 650 °C, 700 °C, 750 °C, 800 °C, 850 °C, 900 °C, 950 °C, or a value falling within a range formed by any two thereof. Optionally, the sintering temperature is: 200 °C ≤ $T_2$ ≤ 800 °C. By controlling the sintering temperature $T_2$ to fall within an appropriate range, this application not only causes the coating modifier to volatilize and form vapor, but also prevents the crystal structure of the material from being disrupted by the loss of Na from the sodium-containing positive electrode material substrate, thereby improving the cycle performance.

In some embodiments, the sintering time is $t_2$, satisfying: 0 < $t_2$ < 36 h. For example, $t_2$ may be 1 h, 2 h, 8 h, 12 h, 16 h, 20 h, 24 h, 28 h, 32 h, 35 h, or a value falling within a range formed by any two thereof. Optionally, the sintering time satisfies: 1 h ≤ $t_2$ ≤ 18 h. By controlling the sintering time $t_2$ to fall within an appropriate range, this application not only implements sufficient reaction between the vapor of the coating modifier and the sodium-containing positive electrode material substrate, but also prevents the crystal structure of the material from being disrupted by the loss of Na from the sodium-containing positive electrode material substrate, thereby further improving the cycle performance.

**Secondary battery**

In a third aspect, an embodiment of this application provides a secondary battery. The secondary battery includes any device in which an electrochemical reaction occurs to implement conversion between chemical energy and electrical energy, for example, a sodium-ion battery.

In some embodiments, the secondary battery according to this application includes a positive electrode plate, a negative electrode plate, a separator, and an electrolyte solution. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

**[Positive electrode plate]**

The positive electrode plate includes a positive current collector and a positive film layer that overlays at least one surface of the positive current collector. The positive film layer includes the positive electrode material according to the first aspect of this application or a positive electrode material prepared by the method according to the second aspect of this application. As an example, the positive current collector includes two surfaces opposite to each other in a thickness direction of the positive current collector. The positive film layer is disposed on either or both of the two opposite surfaces of the positive current collector.

In some embodiments, the positive current collector may be a metal foil or a composite current collector. For example, the metal foil may be an aluminum foil. The composite current collector may include a polymer material substrate and a metal layer formed on at least one surface of the polymer material substrate. The composite current collector may be formed by disposing a metal material on a polymer material substrate. The metal material includes, but is not limited to, aluminum, aluminum alloy, nickel, nickel alloy, titanium, titanium alloy, silver, silver alloy, and the like. The polymer material substrate may be a substrate of polypropylene (PP), polyethylene terephthalate (PET), polybutylene terephthalate (PBT), polystyrene (PS), polyethylene (PE), or the like.

In some embodiments, the positive film layer does not exclude other positive active materials different from the positive electrode material according to the first aspect of this application or different from a positive electrode material prepared by the method according to the second aspect of this application. For example, in some embodiments, the positive film layer of this application may further include other conventional well-known materials suitable for use as a positive active material of a sodium-ion battery. As an example, other positive active materials may include at least one of a sodium transition metal oxide, a polyanionic compound, or a Prussian blue compound.

As an optional technical solution of this application, the transition metal in the sodium transition metal oxide may be at least one of Mn, Fe, Ni, Co, Cr, Cu, Ti, Zn, V, Zr, or Ce. The sodium transition metal oxide is, for example, $Na_xMO_2$, where M is one or more of Ti, V, Mn, Co, Ni, Fe, Cr, or Cu, and $0 < x \leq 1$.

As an optional technical solution of this application, the polyanionic compound may be a type of compound containing a sodium ion, a transition metal ion, and a tetrahedral $(YO4)^{n-}$ anion unit. The transition metal may be at least one of Mn, Fe, Ni, Co, Cr, Cu, Ti, Zn, V, Zr, or Ce; Y may be at least one of P, S, or Si; and n denotes a valence of $(YO4)^{n-}$.

Alternatively, the polyanionic compound may be a type of compound containing a sodium ion, a transition metal ion, a tetrahedral $(YO4)^{n-}$ anion unit, and a halogen anion. The transition metal may be at least one of Mn, Fe, Ni, Co, Cr, Cu, Ti, Zn, V, Zr, or Ce; Y may be at least one of P, S, or Si; n denotes a valence of $(YO4)^{n-}$; and the halogen may be at least one of F, Cl, or Br.

Alternatively, the polyanionic compound may be a type of compound containing a sodium ion, a tetrahedral $(YO4)^{n-}$ anion unit, a polyhedral unit $(ZOy)^{m+}$, and optionally a halogen anion. Y may be at least one of P, S, or Si; n denotes a valence of $(YO4)^{n-}$; Z denotes transition metal, and may be at least one of Mn, Fe, Ni, Co, Cr, Cu, Ti, Zn, V, Zr, or Ce; m denotes a valence of $(Zoy)^{m+}$; and the halogen may be at least one of F, Cl, or Br.

For example, the polyanionic compound is at least one of $NaFePO_4$, $Na_3V_2(PO_4)_3$ (sodium vanadium phosphate, NVP for short), $Na_4Fe_3(PO_4)_2(P_2O_7)$, $NaM'PO_4F$ (M' is one or more of V, Fe, Mn, or Ni), or $Na_3(VO_y)_2(PO_4)_2F_{3-2y}(0 \leq y \leq 1)$.

The Prussian blue compound may be a compound containing a sodium ion, a transition metal ion, or a cyano ion (CN'). The transition metal may be at least one of Mn, Fe, Ni, Co, Cr, Cu, Ti, Zn, V, Zr, or Ce. For example, the Prussian blue compound is $Na_aMe_bMe'_c(CN)_6$, where Me and Me' each are independently at least one of Ni, Cu, Fe, Mn, Co, or Zn, $0 < a \leq 2$, $0 < b < 1$, and $0 < c < 1$.

In some embodiments, the positive film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

The positive electrode plate in this application may be prepared by a conventional method in this field. For example, the positive film layer is generally formed by coating the positive current collector with a positive slurry and then performing drying and cold calendering. The positive electrode slurry is generally formed by dispersing a positive electrode material, an optional conductive agent, an optional binder, and any other ingredients into a solvent and then stirring well. The solvent may be, but without being limited to, N-methyl-pyrrolidone (NMP).

The positive electrode plate according to this application does not exclude other additional functional layers different from the positive film layer. For example, in some embodiments, the positive electrode plate according to this application further includes a conductive undercoat layer (for example, formed of a conductive agent and a binder) disposed on a surface of the positive current collector and sandwiched between the positive current collector and the positive film layer. In other embodiments, the positive electrode plate according to this application further includes a protection layer overlaying the surface of the positive film layer.

**[Negative electrode plate]**

The negative electrode plate includes a negative current collector and a negative film layer disposed on at least one surface of the negative current collector. The negative film layer includes a negative electrode material. As an example, the negative current collector includes two surfaces opposite to each other in a thickness direction of the negative current collector. The negative film layer is disposed on either or both of the two opposite surfaces of the negative current collector.

In some embodiments, the negative current collector may be a metal foil or a composite current collector. For example, the metal foil may be a copper foil. The composite current collector may include a polymer material substrate and a metal layer formed on at least one surface of the polymer material substrate. The composite current collector may be formed by disposing a metal material on a polymer material substrate. The metal material includes, but is not limited to, copper, copper alloy, nickel, nickel alloy, titanium, titanium alloy, silver, silver alloy, and the like. The polymer material substrate includes, but is not limited to, polypropylene (PP), polyethylene terephthalate (PET), polybutylene terephthalate (PBT), polystyrene (PS), polyethylene (PE), and the like.

In some embodiments, the negative electrode material may be a negative active material well-known for use in a secondary battery in the art. As an example, the negative active material may include at least one of the following materials: artificial graphite, natural graphite, soft carbon, hard carbon, silicon-based material, tin-based material, lithium titanium oxide, and the like. The silicon-based material may be at least one selected from simple-substance silicon, a silicon-oxygen compound, a silicon-carbon composite, a silicon-nitrogen composite, and a silicon alloy. The tin-based material may be at least one selected from simple-substance tin, tin-oxygen compound, or tin alloy. However, this application is not limited to such materials, and other conventional materials usable as a negative active material of a battery may be used instead. One of the negative active materials may be used alone, or at least two thereof may be used in combination.

In some embodiments, the negative film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative film layer further optionally includes a conductive agent. The conductive agent may be at least one selected from superconductive carbon, acetylene black, carbon black, Ketjen black, carbon dots, carbon nanotubes, graphene, or carbon nanofibers.

In some embodiments, the negative film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative electrode material, the conductive agent, and the binder and any other ingredients in a solvent (such as deionized water) to form a negative electrode slurry, coating a negative current collector with the negative electrode slurry, and performing steps such as drying and cold calendering to obtain the negative electrode plate.

In some embodiments, the negative electrode plate may be prepared according to the following method: dispersing the ingredients of the negative electrode plate such as the negative active material, the conductive agent, and the binder and any other ingredients in a solvent (such as deionized water) to form a negative slurry, coating a negative current collector with the negative slurry, and performing steps such as drying and cold calendering to obtain the negative electrode plate.

The negative electrode plate according to this application does not exclude other additional functional layers different from the negative film layer. For example, in some embodiments, the negative electrode plate according to this application further includes a conductive undercoat layer (for example, formed of a conductive agent and a binder) disposed on a surface of the negative current collector and sandwiched between the negative current collector and the negative film layer. In other embodiments, the negative electrode plate according to this application further includes a protection layer overlaying the surface of the negative film layer.

**[Electrolyte solution]**

The electrolyte solution serves to conduct active ions between the positive electrode plate and the negative electrode plate. The electrolyte solution applicable to the secondary battery in this application may be an electrolyte solution known in the prior art.

In some embodiments, the electrolyte solution includes an organic solvent, a sodium salt, and optionally a binder. The types of the organic solvent, the sodium salt, and the additive are not particularly limited, and may be selected according to actual needs.

In some embodiments, as an example, the sodium salt includes, but is not limited to, at least one of $NaPF_6$, $NaClO_4$, $NaBCl_4$, $NaSO_3CF_3$, or $Na(CH_3)C_6H_4SO_3$. Of the foregoing sodium salts, one may be used alone, or two or more may be used in combination.

In some embodiments, as an example, the organic solvent includes but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE). Of the foregoing organic solvents, one may be used alone, or two or more may be used simultaneously. Optionally, two or more of the foregoing organic solvents are used simultaneously.

In some embodiments, the additive may include a negative film-forming additive or a positive film-forming additive. The additive may further include an additive capable of improving specified performance of the battery, for example, an additive for improving overcharge performance of the battery, or an additive for improving high- or low-temperature performance of the battery.

As examples, such additives include, but are not limited to, at least one of fluoroethylene carbonate (FEC), vinylene carbonate (VC), vinyl ethylene carbonate (VEC), ethylene sulfate (DTD), propylene sulfate, ethylene sulfite (ES), 1,3-propane sultone (PS), 1,3-propene sultone (PST), sulfonate cyclic quaternary ammonium salt, succinic anhydride, succinonitrile (SN), adiponitrile (ADN), tris(trimethylsilane) phosphate (TMSP), or tris(trimethylsilane) borate (TMSB).

The electrolyte solution may be prepared by a conventional method in this field. For example, the electrolyte solution may be obtained by mixing well an organic solvent, a sodium salt, and optionally an additive. The order of adding the ingredients is not particularly limited. For example, the sodium salt and the optional additive may be added together to the organic solvent and mixed well to obtain the electrolyte solution; or, the sodium salt may be added to the organic solvent, and then the optional additive is added into the organic solvent and mixed well to obtain the electrolyte solution.

**[Separator]**

Disposed between the positive electrode plate and the negative electrode plate, the separator primarily serves to prevent a short circuit between the positive electrode plate and the negative electrode plate while allowing passage of active ions. The type of the separator is not particularly limited in this application, and may be any well-known porous separator that is highly stable both chemically and mechanically.

In some embodiments, the material of the separator may be one or more selected from, but without being limited to, glass fibers, non-woven fabric, polyethylene, polypropylene, or polyvinylidene fluoride. The separator may be a single-layer film or a multilayer composite film. When the separator is a multilayer composite film, materials of different layers may be identical or different. In some embodiments, the separator may be coated with a ceramic coating or a metal oxide coating.

In some embodiments, the positive electrode plate, the negative electrode plate, and the separator may be made into an electrode assembly by winding or stacking.

In some embodiments, the secondary battery cell may include an outer package. The outer package may be configured to package the electrode assembly and the electrolyte.

In some embodiments, the outer package of the secondary battery cell may be a hard shell such as a hard plastic shell, an aluminum shell, a steel shell, or the like. Alternatively, the outer package of the secondary battery cell may be a soft package such as a pouch-type soft package. The material of the soft package may be plastic such as one or more of polypropylene (PP), polybutylene terephthalate (PBT), or polybutylene succinate (PBS).

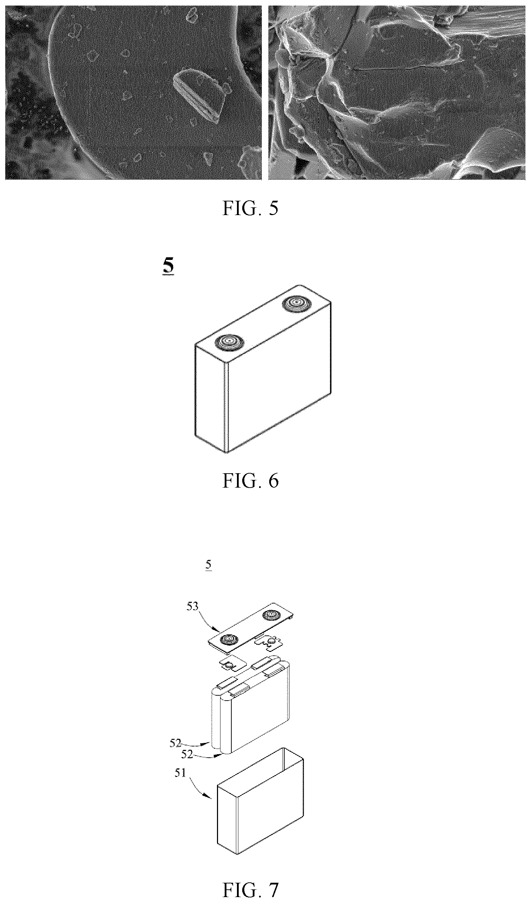

The shape of the secondary battery cell is not particularly limited in this application, and may be cylindrical, prismatic or in any other shape. FIG. 6 shows a prismatic secondary battery 5 as an example.

In some embodiments, referring to FIG. 7, the outer package may include a housing 51 and a cover plate 53. The housing 51 may include a bottom plate and a side plate connected to the bottom plate. The bottom plate and the side plate close in to form an accommodation cavity. The housing 51 is equipped with an opening that communicates with the accommodation cavity. The cover plate 53 is configured to fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in the secondary battery 5 may be one or more, and is adjustable as required.

In some embodiments, the secondary battery may be a battery module formed by assembling a plurality of battery cells. The number of the battery cells included in a battery module may be plural, and may be specifically adjusted according to the practical applications and capacity of the battery module.

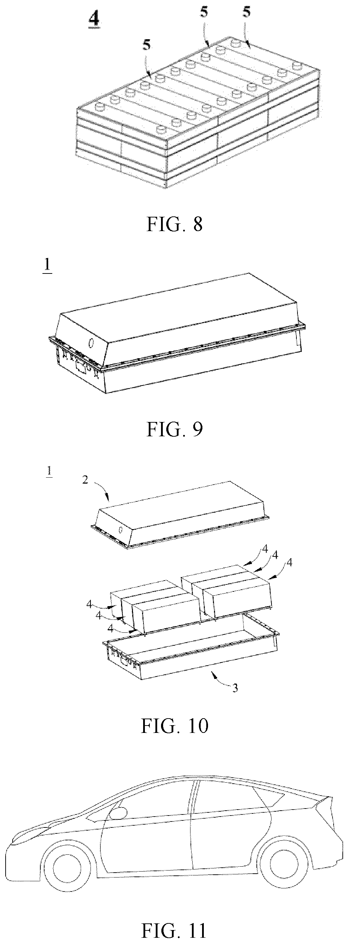

FIG. 8 shows a battery module 4 as an example. Referring to FIG. 8, in the battery module 4, a plurality of battery cells 5 may be arranged sequentially along a length direction of the battery module 4. Alternatively, the secondary batteries may be arranged in any other manner. Further, the plurality of battery cells 5 may be fixed by a fastener.

Optionally, the battery module 4 may further include a shell that provides an accommodation space. The plurality of battery cells 5 are accommodated in the accommodation space.

In some embodiments, the battery module may be assembled into a battery pack. The quantity of the battery modules contained in a battery pack may be adjusted according to the application requirements and the capacity of the battery pack.

In some embodiments, the battery cells may be directly assembled to form a battery pack. The number of battery cells included in a battery pack may be adjusted according to the practical applications and capacity of the battery pack.

FIG. 9 and FIG. 10 show a battery pack 1 as an example. Referring to FIG. 9 and FIG. 10, the battery pack 1 may include a battery box and a plurality of battery modules 4 disposed in the battery box. The battery box includes an upper box 2 and a lower box 3. The upper box 2 is configured to fit and cover the lower box 3 to form a closed space for accommodating the battery modules 4. The plurality of battery modules 4 may be arranged in the battery box in any manner.

Electrical device

In a fifth aspect, an embodiment of this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may be, but is not limited to, a mobile device, an electric vehicle, an electric train, watercraft, satellite, an energy storage system, or the like. For example, the electrical device may be a laptop computer, pen-input computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, or the like.

The secondary battery, battery module, or battery pack may be selected for use in the electrical device based on the use requirements of the electrical device.

FIG. 11 shows a device as an example. The device may be battery electric vehicle, a hybrid electric vehicle, a plug-in hybrid electric vehicle, or the like. A battery pack or a battery module may be employed to meet the requirements of the device for a high power and a high energy density.

**Embodiments**

The following embodiments are more detailed descriptions of the subject-matter disclosed herein. The embodiments are merely intended as illustrative descriptions because, evidently, a person skilled in the art may make various modifications and changes to such embodiments without departing from the disclosure hereof. Unless otherwise specified, all fractions, percentages, and ratios mentioned in the following embodiments are values by mass. All reagents used in the embodiments are commercially available or can be synthesized according to conventional methods, and can be directly put into use without a need of further processing. All the instruments used in the embodiments are commercially available.

**Embodiment 1**

**Preparing a positive electrode material**

Mixing a metal oxide and a sodium salt evenly at an appropriate ratio, and then putting the mixture into a saggar in a box furnace. Sintering the mixture according to a specified sintering system. Cooling the sintered product to a room temperature after completion of the sintering, and pulverizing the cooled product to obtain an O3-type layered oxide as a sodium-containing positive electrode material substrate.

Spreading 20 grams of the O3-type layered oxide ($NaFe_{0.5}Mn_{0.5}O_2$) evenly in a second crucible, and then placing the second crucible in the middle of a first crucible. Spreading boron oxide as a coating modifier evenly in a blank space around the first crucible, and then putting on the crucible cover. Finally, placing the first crucible in a muffle furnace, sintering the furnace at a high temperature of 500 °C for 6 hours, and then cooling the sintered product to obtain a modified sample, that is, a $0.004NaBO_2 \cdot 0.996NaFe_{0.5}Mn_{0.5}O_2$ positive electrode material.

**Preparing a positive electrode plate**

Mixing the foregoing positive electrode material, conductive carbon black, and PVDF as a binder at a mass ratio of 96.7: 1.7: 1.6, adding an appropriate amount of NMP solvent, stirring well with a vacuum mixer to obtain a positive electrode slurry, applying the positive electrode slurry evenly onto both surfaces of the positive current collector aluminum foil, and then performing vacuum-drying at 70 °C for 12 hours, and performing slitting and shearing to obtain a positive electrode plate.

**Preparing a negative electrode plate**

Mixing hard carbon as a negative electrode material, a sodium carboxymethyl cellulose as a thickener, styrene-butadiene rubber as a binder, and acetylene black as a conductive agent at a mass ratio of 97: 1: 1: 1, and adding deionized water. Stirring the mixture with a vacuum mixer to obtain a negative electrode slurry. Applying the negative electrode slurry onto a copper foil evenly. Air-drying the copper foil in a room temperature environment, and then moving the copper foil into a 120 °C oven, drying the copper foil in the oven for 1 hour, and then performing cold-pressing and slitting to obtain a negative electrode plate.

**Preparing an electrolyte solution**

Mixing ethylene carbonate (EC), ethyl methyl carbonate (EMC), and diethyl carbonate (DEC) at a volume ratio of 1: 1: 1 to obtain an organic solvent. Dissolving $NaPF_6$ in the organic solvent, and then adding fluoroethylene carbonate (FEC). Stirring well to obtain an electrolyte solution in which the concentration of $NaPF_6$ is 1 mol/L.

**Preparing a separator**

Using a PE porous film as a separator.

**Preparing a sodium-ion battery**

Stacking the positive electrode plate, the separator, and the negative electrode plate in sequence in such a way that the separator is located between the positive electrode and the negative electrode to serve a purpose of isolation, and then winding the stacked structure to obtain an electrode assembly. Putting the electrode assembly into an outer package, injecting the prepared electrolyte solution, sealing the package, and performing steps such as chemical formation, degassing, and edge trimming to obtain a sodium-ion battery.

**Embodiments 2 to 43**

The preparation method of the sodium-ion battery is similar to that in Embodiment 1 except that the positive electrode material and the relevant parameters for preparing the positive electrode material are adjusted, as detailed in Table 1 below. In the table, "/" indicates that the corresponding parameter does not exist.

In Embodiments 32 to 39, the preparation method of the positive electrode material is: Putting the O3-type layered oxide in a rotary kiln, and putting a modifier in a piece of heating equipment located at the front end. Starting the rotary kiln and the heating equipment. Passing compressed air into the rotary kiln. Operating the heating equipment and the rotary kiln at a preset rotation speed and a preset temperature to sinter the layered oxide. Cooling the sintered product to a room temperature after completion of the sintering, thereby obtaining a modified sample, that is, a positive electrode material.

**Comparative Embodiment 1**

The preparation method of the positive electrode material in Comparative Embodiment 1 is similar to that in Embodiment 1 except that no coating modifier is added in the preparation process.

**Comparative Embodiment 2**

In Comparative Embodiment 2, the O3-type layered oxide is treated by the conventional water washing method to obtain a positive electrode material.

**Comparative Embodiment 3**

In Comparative Embodiment 3, the O3-type layered oxide is treated by the conventional acid-washing method to obtain a positive electrode material.

**Comparative Embodiment 4**

In Comparative Embodiment 4, the O3-type layered oxide is dry-mixed and coated with a coating modifier boric acid to obtain a positive electrode material, in which the dosage of the boric acid is 3000 ppm.

**Comparative Embodiment 5**

The preparation method of the positive electrode material in Comparative Embodiment 5 is similar to that in Embodiment 32 except that the sintering temperature is 2500 °C.

**Comparative Embodiment 6**

The preparation method of the positive electrode material in Comparative Embodiment 6 is similar to that in Embodiment 40 except that no coating modifier is added in the preparation process.

**Comparative Embodiment 7**

The preparation method of the positive electrode material in Comparative Embodiment 7 is similar to that in Embodiment 41 except that no coating modifier is added in the preparation process.

**Table 1**

| | Preparation method parameter | | | | | | | Positive electrode material parameter | | | |
|---|---|---|---|---|---|---|---|---|---|---|---|
| | Crystal form of substrate | Type of coating modifier | Mass ratio between coating modifier and substrate | Sintering time (h) | Sintering temperature (°C) | Rotary kiln rotation speed (r/min) | Flow rate of vapor of coating modifier (ml/min) | Average particle diameter of matrix (μm) | Coating layer thickness (nm) | Mass percent of coating layer in positive electrode material (%) | Mass percent of element M in doped region (%) |
| Embodiment 1 | O3 type | Boron oxide | 0.1 | 6 | 500 | / | / | 15 | 2.5 | 0.4 | 0.217 |
| Embodiment 2 | O3 type | Boron oxide | 0.01 | 6 | 500 | / | / | 15 | 1 | 0.07 | 0.082 |
| Embodiment 3 | O3 type | Boron oxide | 0.05 | 6 | 500 | / | / | 15 | 1.4 | 0.15 | 0.143 |
| Embodiment 4 | O3 type | Boron oxide | 0.25 | 6 | 500 | / | / | 15 | 3.8 | 0.7 | 0.211 |
| Embodiment 5 | O3 type | Boron oxide | 1 | 6 | 500 | / | / | 15 | 4.4 | 0.9 | 0.2838 |
| Embodiment 6 | O3 type | Boron oxide | 0.1 | 6 | 200 | / | / | 15 | 0.57 | 0.05 | 0.051 |
| Embodiment 7 | O3 type | Boron oxide | 0.1 | 6 | 400 | / | / | 15 | 2.0 | 0.33 | 0.199 |
| Embodiment 8 | O3 type | Boron oxide | 0.1 | 6 | 600 | / | / | 15 | 2.8 | 0.51 | 0.218 |
| Embodiment 9 | O3 type | Boron oxide | 0.1 | 6 | 800 | / | / | 15 | 2.7 | 0.48 | 0.299 |
| Embodiment 10 | O3 type | Boric acid | 0.1 | 6 | 500 | / | / | 15 | 2.7 | 0.43 | 0.232 |
| Embodiment 11 | O3 type | Boric acid | 0.01 | 6 | 500 | / | / | 15 | 1.2 | 0.10 | 0.092 |

| | Preparation method parameter | | | | | | | Positive electrode material parameter | | | |
|---|---|---|---|---|---|---|---|---|---|---|---|
| | Crystal form of substrate | Type of coating modifier | Mass ratio between coating modifier and substrate | Sintering time (h) | Sintering temperature (°C) | Rotary kiln rotation speed (r/min) | Flow rate of vapor of coating modifier (ml/min) | Average particle diameter of matrix (μm) | Coating layer thickness (nm) | Mass percent of coating layer in positive electrode material (%) | Mass percent of element M in doped region (%) |
| Embodiment 12 | O3 type | Boric acid | 0.05 | 6 | 500 | / | / | 15 | 1.5 | 0.18 | 0.163 |
| Embodiment 13 | O3 type | Boric acid | 0.25 | 6 | 500 | / | / | 15 | 3.7 | 0.69 | 0.221 |
| Embodiment 14 | O3 type | Boric acid | 1 | 6 | 500 | / | / | 15 | 4.3 | 0.87 | 0.2751 |
| Embodiment 15 | O3 type | Boric acid | 0.1 | 1 | 500 | / | / | 15 | 1.2 | 0.13 | 0.121 |
| Embodiment 16 | O3 type | Boric acid | 0.1 | 3 | 500 | / | / | 15 | 1.8 | 0.21 | 0.187 |
| Embodiment 17 | O3 type | Boric acid | 0.1 | 12 | 500 | / | / | 15 | 3.1 | 0.68 | 0.255 |
| Embodiment 18 | O3 type | Boric acid | 0.1 | 18 | 500 | / | / | 15 | 4.0 | 0.77 | 0.269 |
| Embodiment 19 | O3 type | Boric acid | 0.1 | 6 | 200 | / | / | 15 | 0.5 | 0.08 | 0.05 |
| Embodiment 20 | O3 type | Boric acid | 0.1 | 6 | 400 | / | / | 15 | 2.2 | 0.35 | 0.177 |
| Embodiment 21 | O3 type | Boric acid | 0.1 | 6 | 600 | / | / | 15 | 2.9 | 0.57 | 0.194 |
| Embodiment 22 | O3 type | Boric acid | 0.1 | 6 | 800 | / | / | 15 | 4.5 | 0.89 | 0.268 |

| | Preparation method parameter | | | | | | | Positive electrode material parameter | | | |
|---|---|---|---|---|---|---|---|---|---|---|---|
| | Crystal form of substrate | Type of coating modifier | Mass ratio between coating modifier and substrate | Sintering time (h) | Sintering temperature (°C) | Rotary kiln rotation speed (r/min) | Flow rate of vapor of coating modifier (ml/min) | Average particle diameter of matrix (μm) | Coating layer thickness (nm) | Mass percent of coating layer in positive electrode material (%) | Mass percent of element M in doped region (%) |
| Embodiment 23 | O3 type | Ammonium | 0.1 | 6 | 400 | / | / | 15 | 2.8 | 0.55 | 0.223 |
| Embodiment 24 | O3 type | Ammonium | 0.01 | 6 | 400 | / | / | 15 | 1.1 | 0.16 | 0.101 |
| Embodiment 25 | O3 type | Ammonium | 0.05 | 6 | 400 | / | / | 15 | 1.5 | 0.23 | 0.143 |
| Embodiment 26 | O3 type | Ammonium | 0.25 | 6 | 400 | / | / | 15 | 3.4 | 0.66 | 0.254 |
| Embodiment 27 | O3 type | Ammonium | 1 | 6 | 400 | / | / | 15 | 4.6 | 0.87 | 0.289 |
| Embodiment 28 | O3 type | Ammonium | 0.1 | 6 | 200 | / | / | 15 | 0.9 | 0.13 | 0.094 |
| Embodiment 29 | O3 type | Ammonium | 0.1 | 6 | 300 | / | / | 15 | 1.7 | 0.24 | 0.155 |
| Embodiment 30 | O3 type | Ammonium | 0.1 | 6 | 600 | / | / | 15 | 2.9 | 0.49 | 0.207 |
| Embodiment 31 | O3 type | Ammonium | 0.1 | 6 | 800 | / | / | 15 | 3.1 | 0.64 | 0.239 |
| Embodiment 32 | O3 type | Boric acid | 0.1 | 6 | 500 | 1 | 2.5 | 15 | 2.1 | 0.33 | 0.195 |
| Embodiment 33 | O3 type | Boric acid | 0.1 | 6 | 500 | 3 | 2.5 | 15 | 2.2 | 0.39 | 0.206 |

| | Preparation method parameter | | | | | | | Positive electrode material parameter | | | |
|---|---|---|---|---|---|---|---|---|---|---|---|
| | Crystal form of substrate | Type of coating modifier | Mass ratio between coating modifier and substrate | Sintering time (h) | Sintering temperature (°C) | Rotary kiln rotation speed (r/min) | Flow rate of vapor of coating modifier (ml/min) | Average particle diameter of matrix (μm) | Coating layer thickness (nm) | Mass percent of coating layer in positive electrode material (%) | Mass percent of element M in doped region (%) |
| Embodiment 34 | O3 type | Boric acid | 0.1 | 6 | 500 | 5 | 2.5 | 15 | 2.4 | 0.45 | 0.213 |
| Embodiment 35 | O3 type | Boric acid | 0.1 | 6 | 500 | 8 | 2.5 | 15 | 2.7 | 0.58 | 0.243 |
| Embodiment 36 | O3 type | Boric acid | 0.1 | 6 | 500 | 8 | 0.5 | 15 | 1.5 | 0.27 | 0.154 |
| Embodiment 37 | O3 type | Boric acid | 0.1 | 6 | 500 | 8 | 1 | 15 | 1.8 | 0.29 | 0.177 |
| Embodiment 38 | O3 type | Boric acid | 0.1 | 6 | 500 | 8 | 2 | 15 | 1.9 | 0.31 | 0.184 |
| Embodiment 39 | O3 type | Boric acid | 0.1 | 6 | 500 | 8 | 5 | 15 | 3.9 | 0.79 | 0.265 |
| Embodiment 40 | Monocrystalline | Boric acid | 0.1 | 6 | 500 | / | / | 15 | 2.7 | 0.43 | 0.232 |
| Embodiment 41 | Polycrystalline | Boric acid | 0.1 | 6 | 500 | / | / | 15 | 1.5 | 0.47 | 0.243 |
| Embodiment 42 | O3 type | Boron oxide | 0.1 | 6 | 500 | / | / | 8 | 1.9 | 0.41 | 0.234 |
| Embodiment 43 | O3 type | Boron oxide | 0.1 | 6 | 500 | / | / | 1 | 1.3 | 0.51 | 0.251 |
| Comparative Embodiment 1 | O3 type | / | / | / | / | / | / | 15 | / | / | / |

EP 4 407 711 A1

| | Preparation method parameter | | | | | | | Positive electrode material parameter | | | |
|---|---|---|---|---|---|---|---|---|---|---|---|
| | Crystal form of substrate | Type of coating modifier | Mass ratio between coating modifier and substrate | Sintering time (h) | Sintering temperature (°C) | Rotary kiln rotation speed (r/min) | Flow rate of vapor of coating modifier (ml/min) | Average particle diameter of matrix (μm) | Coating layer thickness (nm) | Mass percent of coating layer in positive electrode material (%) | Mass percent of element M in doped region (%) |
| Comparative Embodiment 2 | O3 type | / | / | 6 | 500 | / | / | 15 | / | 0 | / |
| Comparative Embodiment 3 | O3 type | / | / | 6 | 500 | / | / | 15 | 1.3 | 0.17 | 0.100 |
| Comparative Embodiment 4 | O3 type | Boric acid | / | 6 | 500 | / | / | 15 | 1.3 | 0.19 | 0.091 |
| Comparative Embodiment 5 | O3 type | Boric acid | 0.1 | 6 | 2500 | / | / | 15 | 1.1 | 0.12 | 0.109 |
| Comparative Embodiment 6 | Monocrystalline | / | / | / | / | / | / | 15 | / | / | / |
| Comparative Embodiment 7 | Polycrystalline | / | / | / | / | / | / | 15 | / | / | / |

EP 4 407 711 A1

**Performance Test**

(1) Testing the content of residual alkali on the surface of the positive electrode material

Weighing out 20.000 grams of sample, adding 100 mL of deionized water, stirring for 30 min, and filtering the solution. Pipetting 60 mL of the filtrate into a 250 mL conical flask. Adding 10 drops of methyl orange together with phenolphthalein as an indicator into the sample solution, and shaking well until the color of the sample solution changes to purple. Adding a hydrochloric acid (with a concentration of 0.1103 mol/L) as a titrant dropwise, and letting the titrant react with the sample until the color of the sample solution changes to bright green, and recording the volume of the consumed hydrochloric acid at this time as Vi. Continuing to titrate the sample until the color changes to phenolphthalein pink, and recording the volume of the consumed hydrochloric acid at this time as $V_2$.

Content of residual alkali on the surface (%) = $C \times V_2/2/1000 \times m_2/m_3/m_1 \times 73.89 \times 100$

$$Na_2CO_3 \text{ content (\%)} = C \times (V_2 - V_1)/1000 \times m_2/m_3/m_1 \times 73.89 \times 100$$

$$NaOH \text{ content (\%)} = C \times (2V_1 - V_2)/1000 \times m_2/m_3/m_1 \times 23.95 \times 100$$

In the formulas above, $m_1$ is the mass of the weighed sample, $m_2$ is the mass of the pipetted water, and $m_3$ is the mass of the filtrate.

(2) Testing the mass percent of the element M in the doped region

An X-ray photoelectron spectrometer (XPS) can identify the doped region, the coating thickness, and the mass percent and content of the element M in a corresponding region. The mass percent of the internal element M is measured by using the XPS, and then the mass percent of the element M in the doped region is calculated based on the measured mass percent. Alternatively, the mass percent of the element M in the doped region is determined by using a transmission electron microscope (TEM) together with an energy dispersive spectrometer (EDS).

(3) Testing the mass percent of the element M in the positive electrode material

The mass percent of the element M in the positive electrode material bears the meaning known in the art, and may be measured by using an instrument and method known in the art. For example, the aggregate mass percent of the element M in the positive electrode material may be measured by using an inductively coupled plasma emission spectrometer (ICP).

(4) Testing the surface morphology of the positive electrode material (with a SEM)

Testing the surface morphology of the positive electrode material by using a JSM-6510 scanning electron microscope (SEM) manufactured by Japan JEOL.

(5) Testing the specific discharge capacity of the sodium-ion battery

Charging a sodium-ion battery at a constant current density of 10 mA/g at 25 °C until the voltage reaches 4.3 V, and then discharging the battery at a constant current density of 10 mA/g until the voltage reaches 1.5 V, thereby obtaining a specific discharge capacity.

(6) Testing the cycle performance of the sodium-ion battery

Testing the cycle performance at a temperature of 25 °C. Charging a battery at a constant current of 1 C until the voltage reaches 4.3 V, leaving the battery to stand for 5 minutes, and then discharging the battery at a current of 1 C until the voltage reaches 1.5 V, and recording the capacity obtained in this step as an initial capacity. Performing the 1 C charge/1 C discharge test cyclically until the cycle capacity retention rate of the sodium-ion battery drops to 80%, and recording the number of cycles at this time. Charging and discharging the battery for 100 cycles, and recording the number of cycles corresponding to the capacity retention rate 80%.

Table 2 shows performance test results of Embodiments 1 to 43 and Comparative Embodiments 1 to 7.

Table 2

|  | Content of residual alkali on the surface (NaOH and $Na_2CO_3$, wt%) | Content of element M (ppm) | Specific discharge capacity at 0.1 C | 100th-cycle capacity retention rate (%) | Number of cycles recorded when capacity retention rate drops to 80% |
|---|---|---|---|---|---|
| Embodiment 1 | 1.523 | 2899 | 128.9 | 86.10 | 289 |
| Embodiment 2 | 3.842 | 635 | 136 | 70.20 | 133 |
| Embodiment 3 | 2.927 | 1423 | 132.7 | 78.30 | 178 |
| Embodiment 4 | 2.466 | 5012 | 123.8 | 93.72 | 365 |
| Embodiment 5 | 3.321 | 11034 | 103.4 | 97.00 | 423 |
| Embodiment 6 | 4.241 | 345 | 126.8 | 69.70 | 102 |
| Embodiment 7 | 2.886 | 1256 | 131.5 | 70.30 | 126 |
| Embodiment 8 | 2.008 | 3623 | 128.3 | 88.60 | 302 |
| Embodiment 9 | 2.534 | 5133 | 125.7 | 91.20 | 331 |
| Embodiment 10 | 1.425 | 3010 | 131.2 | 89.30 | 327 |
| Embodiment 11 | 3.732 | 789 | 137.9 | 70.20 | 142 |
| Embodiment 12 | 3.023 | 1322 | 135.5 | 75.12 | 158 |
| Embodiment 13 | 2.213 | 5562 | 120.8 | 94.77 | 377 |
| Embodiment 14 | 3.598 | 13278 | 98.7 | 99.10 | 554 |
| Embodiment 15 | 2.428 | 2122 | 133.7 | 72.70 | 145 |
| Embodiment 16 | 1.745 | 2634 | 134.6 | 77.40 | 166 |
| Embodiment 17 | 2.996 | 3645 | 129.7 | 90.40 | 311 |
| Embodiment 18 | 3.102 | 4432 | 128.9 | 91.70 | 319 |
| Embodiment 19 | 4.034 | 438 | 127.7 | 68.80 | 124 |
| Embodiment 20 | 2.998 | 1327 | 133.5 | 70.30 | 140 |

(continued)

| | Content of residual alkali on the surface (NaOH and Na$_2$CO$_3$, wt%) | Content of element M (ppm) | Specific discharge capacity at 0.1 C | 100th-cycle capacity retention rate (%) | Number of cycles recorded when capacity retention rate drops to 80% |
|---|---|---|---|---|---|
| Embodiment 21 | 1.954 | 3754 | 128.3 | 90.90 | 300 |
| Embodiment 22 | 2.135 | 4995 | 125.7 | 93.30 | 352 |
| Embodiment 23 | 1.756 | 2515 | 132.8 | 83.70 | 265 |
| Embodiment 24 | 4.033 | 371 | 135 | 71.60 | 124 |
| Embodiment 25 | 3.975 | 690 | 134.5 | 73.90 | 142 |
| Embodiment 26 | 1.882 | 4431 | 124.7 | 88.40 | 298 |
| Embodiment 27 | 2.865 | 8947 | 107.3 | 90.60 | 309 |
| Embodiment 28 | 4.145 | 255 | 130.5 | 68.90 | 119 |
| Embodiment 29 | 3.806 | 549 | 132.9 | 74.70 | 152 |
| Embodiment 30 | 2.342 | 3423 | 131.6 | 80.50 | 236 |
| Embodiment 31 | 1.805 | 4598 | 127.7 | 87.40 | 268 |
| Embodiment 32 | 1.276 | 3367 | 131.2 | 90.20 | 285 |
| Embodiment 33 | 1.153 | 3798 | 128.8 | 93.40 | 336 |
| Embodiment 34 | 1.332 | 3278 | 129 | 91.70 | 317 |
| Embodiment 35 | 1.452 | 3031 | 132.1 | 90.60 | 293 |
| Embodiment 36 | 1.379 | 2011 | 134.3 | 89.11 | 287 |
| Embodiment 37 | 1.321 | 2885 | 133.4 | 89.78 | 290 |
| Embodiment 38 | 1.299 | 3245 | 132.0 | 90.00 | 299 |
| Embodiment 39 | 1.242 | 4212 | 127.8 | 92.30 | 311 |
| Embodiment 40 | 0.875 | 1839 | 105.3 | 91.50 | 318 |
| Embodiment 41 | 13.473 | 3010 | 165.7 | 78.40 | 180 |

(continued)

| | Content of residual alkali on the surface (NaOH and $Na_2CO_3$, wt%) | Content of element M (ppm) | Specific discharge capacity at 0.1 C | 100th-cycle capacity retention rate (%) | Number of cycles recorded when capacity retention rate drops to 80% |
|---|---|---|---|---|---|
| Embodiment 42 | 2.145 | 2317 | 134.2 | 76.40 | 159 |
| Embodiment 43 | 3.895 | 2268 | 135.7 | 70.30 | 101 |
| Comparative Embodiment 1 | 4.598 | 0 | 133 | 66.20 | 35 |
| Comparative Embodiment 2 | 1.233 | 0 | 118.3 | 73.30 | 133 |
| Comparative Embodiment 3 | 1.129 | 1022 | 118.47 | 70.30 | 114 |
| Comparative Embodiment 4 | 2.472 | 2789 | 124.1 | 81.30 | 200 |
| Comparative Embodiment 5 | 10.342 | 2310 | 88.9 | 56.80 | 25 |
| Comparative Embodiment 6 | 1.079 | 0 | 97.5 | 85.70 | 207 |
| Comparative Embodiment 7 | 16.746 | 0 | 172 | 60.40 | 30 |

As can be seen from the SEM image of the positive electrode material in Embodiment 1 (right drawing) and Comparative Embodiment 1 (left drawing) in FIG. 5, the positive electrode material in Embodiment 1 has achieved surface coating. As can be seen from analysis of Embodiment 1 versus Comparative Embodiment 1, and Embodiment 40 versus Comparative Embodiment 6, and Embodiment 41 versus Comparative Embodiment 7, when the coating modifier is not added in the preparation process, the residual alkali content of the positive electrode material is significantly high, and the specific discharge capacity, the capacity retention rate, and the number of cycles of the sodium-ion battery are significantly low, indicating that the coating modifier of this application added in the preparation process can effectively reduce the residual alkali content and improve the cycle performance of the sodium-ion battery.

As can be seen from analysis of Embodiment 1 versus Comparative Embodiment 2, the conventional water washing method in Comparative Embodiment 2 reduces the residual alkali content to some extent, but causes the specific discharge capacity, the capacity retention rate, and the number of cycles of the sodium-ion battery to be significantly lower than those of Embodiment 1, indicating that the method of this application can maintain good cycle performance of the sodium-ion battery while reducing the residual alkali content, and is significantly superior to the conventional water washing method.

As can be seen from analysis of Embodiment 1 versus Comparative Embodiment 3, the conventional acid-washing method in Comparative Embodiment 3 reduces the residual alkali content to some extent, but causes the specific discharge capacity, the capacity retention rate, and the number of cycles of the sodium-ion battery to be significantly lower than those of Embodiment 1, indicating that the method of this application can maintain good cycle performance of the sodium-ion battery while reducing the residual alkali content, thereby being significantly superior to the conventional acid-washing method.

As can be seen from analysis of Embodiment 1 versus Comparative Embodiment 4, after the O3-type layered oxide is dry-mixed and coated with the coating modifier boric acid in Comparative Embodiment 4, the residual alkali content of the positive electrode material is significantly higher than that of Embodiment 1, and the specific discharge capacity, the capacity retention rate, and the number of cycles of the sodium-ion battery are significantly lower than those of Embodiment 1, indicating that the method of this application reduces the residual alkali content more effectively and also ensures good cycle performance of the sodium-ion battery, thereby being significantly superior to the dry-mix coating method.

As can be seen from analysis of Embodiment 32 versus Comparative Embodiment 5, when the sintering temperature goes beyond the range specified herein, the residual alkali content of the positive electrode material is significantly high, and the specific discharge capacity, the capacity retention rate, and the number of cycles of the sodium-ion battery are significantly low, indicating that the sintering temperature needs to be controlled within the range specified herein in preparing the positive electrode material based on the method of this application, so as to effectively reduce the residual alkali content and enhance the cycle performance of the sodium-ion battery.

The technical features in the foregoing embodiments may be combined arbitrarily. For brevity, not all possible combinations of the technical features in the embodiments are described. However, to the extent that no conflict exists, all such combinations of the technical features are considered falling within the scope hereof.

What is described above is merely specific embodiments of this application, but is not intended to limit the protection scope of this application. Various equivalent modifications and replacements conceivable by any person skilled in the art without departing from the technical scope disclosed herein still fall within the protection scope of this application. Therefore, the protection scope of this application is subject to the protection scope of the claims, and the specification and the accompanying drawings may be used for interpreting the protection scope of the claims.

**Claims**

1. A positive electrode material, comprising:

   a sodium-containing positive electrode material substrate; and
   a coating layer, covering at least a part of a surface of the sodium-containing positive electrode material substrate, wherein the coating layer comprises $Na_xM_yO_2$, wherein M comprises at least one of B, Si, or P, $x > 0$, and $y > 0$.

2. The positive electrode material according to claim 1, wherein the coating layer comprises:

   a transition layer relatively close to the sodium-containing positive electrode material substrate, wherein the transition layer comprises an element M-doped region; and
   an oxide layer relatively away from the sodium-containing positive electrode material substrate, wherein the oxide layer comprises $Na_xM_yO_2$.

3. The positive electrode material according to claim 2, wherein the positive electrode material satisfies at least one of the following conditions:

   (1) a content of residual alkali on a surface of the positive electrode material is 0.5 wt% to 5.5 wt%, and optionally 0.8 wt% to 4.5 wt%; and
   (2) based on a total mass of the coating layer, a mass percent of the element M in the doped region is greater than the mass percent of the element M in the oxide layer, wherein

   optionally, the mass percent of the element M in the doped region is 0.05 wt% to 0.3 wt%.

4. The positive electrode material according to any one of claims 1 to 3, wherein the positive electrode material satisfies at least one of the following conditions:

   (1) the sodium-containing positive electrode material substrate comprises one or more of a layered oxide, a Prussian blue compound, or a polyanionic compound, wherein

   optionally, the layered oxide is expressed by a chemical formula $Na_xMn_aFe_bNi_cL_dO_{2-e}$, wherein, $0.7 < x \leq 1$, $a > 0$, $b \geq 0$, $0.1 < c \leq 0.3$, $d \geq 0$, $a + b + c + d + e = 1$, $-0.1 \leq e \leq 0.1$, and L is one or more selected from Cu, Li, Ti, Zr, K, Nb, Mg, Ca, Mo, Zn, Cr, W, Bi, Sn, Ge, Al, Si, La, Ta, P, or B;
   further optionally, the sodium-containing positive electrode material substrate is an O3-type layered oxide;

(2) the sodium-containing positive electrode material substrate is a micron-scale particle, and an average particle diameter of the micron-scale particle is 1 $\mu$m to 25 $\mu$m, and optionally 1 $\mu$m to 15 $\mu$m;

(3) a mass percent of the coating layer in the positive electrode material is 0.001% to 3%, optionally 0.01% to 2%, and further optionally 0.01% to 1%; and

(4) a thickness of the coating layer is 0.5 nm to 30 nm, and optionally 1 nm to 5 nm.

5. A method for preparing a positive electrode material, comprising:

providing a sodium-containing positive electrode material substrate; and

performing surface heat treatment on the sodium-containing positive electrode material substrate by using vapor of a coating modifier, so as to form a $Na_xM_yO_2$-containing coating layer on at least a part of the surface of the sodium-containing positive electrode material substrate and obtain a positive electrode material, wherein M comprises at least one of B, Si, or P, x > 0, and y > 0.

6. The method according to claim 5, wherein the performing surface heat treatment on the sodium-containing positive electrode material substrate by using vapor of a coating modifier comprises:

sintering the sodium-containing positive electrode material substrate and the coating modifier, causing the sodium-containing positive electrode material substrate to contact and react with the vapor of the coating modifier, and forming a transition layer and an oxide layer on at least a part of the surface of the sodium-containing positive electrode material substrate, wherein the transition layer is relatively close to the sodium-containing positive electrode material substrate, and the oxide layer is relatively far away from the sodium-containing positive electrode material substrate; and

the transition layer comprises an element M-doped region, and the oxide layer comprises $Na_xM_yO_2$.

7. The method according to claim 5 or 6, wherein the method satisfies at least one of the following conditions:

(1) the coating modifier comprises one or more of a boric acid, a boron oxide, a silicic acid, or ammonium dihydrogen phosphate;

(2) the sodium-containing positive electrode material substrate comprises one or more of a layered oxide, a Prussian blue compound, or a polyanionic compound, and is optionally an O3-type layered oxide;

(3) a mass ratio between the coating modifier and the sodium-containing positive electrode material substrate is m, satisfying: 0 < m < 2, and optionally $0.05 \leq m \leq 1$; and

(4) during the sintering, the coating modifier is in a solid phase or a liquid phase, and is optionally in a solid phase.

8. The method according to any one of claims 5 to 7, wherein the sintering the sodium-containing positive electrode material substrate and the coating modifier comprises:

providing a first container, wherein the first container contains the coating modifier and a second container, the second container contains the sodium-containing positive electrode material substrate, and a gas phase of the first container communicates with a gas phase of the second container; and

sintering the first container.

9. The method according to claim 8, the providing a first container comprises:

providing the second container;

placing the second container into the first container; and

laying the coating modifier in at least a part of a region between the first container and an outer wall of the second container, wherein a thickness of the laid coating modifier is optionally not greater than 2 cm.

10. The method according to claim 8 or 9, wherein the method satisfies at least one of the following conditions:

(1) the sintering is performed at a temperature of $T_1$, $0 < T_1 < 2000$ °C, and optionally 200 °C $\leq T_1 \leq$ 800 °C;

(2) the sintering continues for a time of $t_1$, $0 < t_i < 36$ h, and optionally 1 h $\leq t_1 \leq$ 18 h; and

(3) the first container and the second container each is independently a crucible.

11. The method according to any one of claims 5 to 7, wherein the sintering the sodium-containing positive electrode material substrate and the coating modifier comprises:

heat-treating the coating modifier to form vapor of the coating modifier;

passing the vapor of the coating modifier into a rotary kiln containing the sodium-containing positive electrode material substrate; and

sintering the vapor of the coating modifier passed into the rotary kiln and the sodium-containing positive electrode material substrate.

12. The method according to claim 11, wherein the method satisfies at least one of the following conditions:

(1) the sintering is performed at a temperature of $T_2$, $0 < T_2 < 1000$ °C, and optionally $200$ °C $\leq T_2 \leq 800$ °C; and
(2) the sintering continues for a time of $t_2$, $0 < t_2 < 36$ h, and optionally $1$ h $\leq t_2 \leq 18$ h.

13. The method according to claim 11 or 12, wherein the method satisfies at least one of the following conditions:

(1) the heat treatment is performed at a temperature of $T_3$, $300 < T_3 < 2000$ °C, and optionally $400$ °C $\leq T_3 \leq 1800$ °C;
(2) a rotation speed of the rotary kiln is R, $0$ r/min $< R \leq 15$ r/min, and optionally $3$ r/min $\leq R \leq 8$ r/min; and
(3) a flow rate of the vapor of the coating modifier is v, $0$ ml/min $< v \leq 5$ ml/min, and optionally $0.5$ ml/min $\leq v \leq 2$ ml/min.

14. A positive electrode plate, comprising the positive electrode material according to any one of claims 1 to 4 or a positive electrode material prepared by the method according to any one of claims 5 to 13.

15. A secondary battery, comprising the positive electrode plate according to claim 14.

16. An electrical device, comprising the secondary battery according to claim 15.

FIG. 1

FIG. 2

FIG. 3

FIG. 4

FIG. 5

**5**

FIG. 6

FIG. 7

FIG. 8

FIG. 9

FIG. 10

FIG. 11

**INTERNATIONAL SEARCH REPORT**

| International application No. |
| --- |
| **PCT/CN2022/125840** |

| A. | CLASSIFICATION OF SUBJECT MATTER |
| --- | --- |

H01M4/36(2006.01)i; H01M4/505(2010.01)i

According to International Patent Classification (IPC) or to both national classification and IPC

| B. | FIELDS SEARCHED |
| --- | --- |

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS; CNTXT; VEN; ENTXT; CNKI: 钠离子电池, 包覆, 壳, 残碱, 酸, 正极, sodium ion battery, coat, shell, residual alkali, acid, positive electrode

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 105722791 A (SUMITOMO METAL MINING CO., LTD.) 29 June 2016 (2016-06-29) description, paragraphs 2, 67-101, and 119-133, and figures 1-11 | 1-16 |
| X | KR 20200034298 A (SEJONG UNIVERSITY INDUSTRY ACADEMY COOPERATION FOUNDATION) 31 March 2020 (2020-03-31) description, paragraphs 8-58 | 1-16 |
| X | JP 2016023118 A (SUMITOMO METAL MINING CO., LTD.) 08 February 2016 (2016-02-08) description, paragraphs 17-83, and figures 1-11 | 1-16 |
| A | CN 111370664 A (LIYANG HINA BATTERY TECHNOLOGY CO., LTD.) 03 July 2020 (2020-07-03) entire document | 1-16 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **04 July 2023** | **05 July 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2022/125840**

| Patent document cited in search report | | | Publication date (day/month/year) | Patent family member(s) | | | Publication date (day/month/year) |
|---|---|---|---|---|---|---|---|
| CN | 105722791 | A | 29 June 2016 | JP | 5825455 | B2 | 02 December 2015 |
| | | | | JPWO | 2015072359 | A1 | 16 March 2017 |
| | | | | US | 2016301063 | A1 | 13 October 2016 |
| | | | | US | 9627680 | B2 | 18 April 2017 |
| | | | | WO | 2015072359 | A1 | 21 May 2015 |
| | | | | CN | 105722791 | B | 26 January 2018 |
| KR | 20200034298 | A | 31 March 2020 | KR | 102120071 | B1 | 08 June 2020 |
| JP | 2016023118 | A | 08 February 2016 | None | | | |
| CN | 111370664 | A | 03 July 2020 | CN | 111370664 | B | 29 April 2022 |

Form PCT/ISA/210 (patent family annex) (July 2022)